# EUROPÄISCHE PATENTSCHRIFT

(11) **EP 1 355 128 B1**
(45) Veröffentlichungstag und Bekanntmachung des Hinweises auf die Patenterteilung: **23.08.2006**
(21) Anmeldenummer: 03007825.7
(22) Anmeldetag: 04.04.2003
(51) Int. Cl.: G01B 11/27, G01S 17/88

(54) **Automatische Ausrichtung eines Sensors**
Automatic alignment of a sensor
Alignement automatique d'un senseur

(30) Priorität: 18.04.2002 DE 10217294
(43) Veröffentlichungstag der Anmeldung: 22.10.2003
(73) Patentinhaber: SICK AG, 79183 Waldkirch (DE)
(72) Erfinder: Jahn, Axel, 79183 Waldkirch (DE)
(74) Vertreter: Manitz, Finsterwald & Partner GbR

(56) Entgegenhaltungen:
- EP-A- 0 568 276
- US-A- 5 805 286
- US-A1- 2001 024 171
- PATENT ABSTRACTS OF JAPAN vol. 2000, no. 10, 17. November 2000 (2000-11-17) & JP 2000 206243 A (HITACHI LTD), 28. Juli 2000 (2000-07-28) -& DATABASE WPI Section EI, Week 200049 Derwent Publications Ltd., London, GB; Class W06, AN 2000-536156 XP002252156 & JP 2000 206243 A (HITACHI LTD), 28. Juli 2000 (2000-07-28) -& JP 2000 206243 A (HITACHI LTD)

## Beschreibung

Die Erfindung betrifft ein Verfahren sowie eine Vorrichtung zum Bestimmen der Ausrichtung eines an einen Gegenstand angebrachten optoelektronischen Sensors, der zur Erfassung der Umgebung des Gegenstands mit zumindest einem wiederholend ausgesandten Abtaststrahl in wenigstens einer Abtastebene einen vorgegebenen Winkelbereich von bevorzugt 360° überstreicht.

Der Gegenstand, an dem der Sensor angebracht ist, ist vorzugsweise ein Fahrzeug, wobei es sich hierbei um ein Kraftfahrzeug oder um ein fahrerloses Fahrzeug handeln kann, wie es beispielsweise in Transportsystemen eingesetzt wird.

Bei dem optoelektronischen Sensor handelt es sich vorzugsweise um einen Laserscanner, insbesondere um einen Entfernungen und Winkel messenden Laserscanner, der in der Abtastebene zu jedem Entfernungswert einen auf einen Referenzwinkel bezogenen Winkelwert liefert.

Die optoelektronischen Sensoren bzw. Laserscanner werden beispielsweise zur Überwachung des Fahrweges und zur Navigation der Fahrzeuge eingesetzt. Insbesondere bei Fahrzeuganwendungen ist eine möglichst exakte Ausrichtung des Sensors bezüglich des Fahrzeugs von großer Wichtigkeit. Wenn beispielsweise die Fahrzeuglängsachse und ein als so genannter 0°-Schuss ausgesandter Abtaststrahl des Sensors nicht parallel zueinander verlaufen, dann stimmen die Ausrichtungen der Abtastebene des Sensors einerseits und der Horizontalebene des Fahrzeugs andererseits nicht überein, d.h. der Sensor ist bezüglich eines fahrzeugfesten Koordinatensystems nicht korrekt ausgerichtet.

Eine derartige Fehlausrichtung des Sensors kann beispielsweise zur Folge haben, dass ein vom Sensor erfasstes Objekt scheinbar außerhalb des Fahrweges liegt, obwohl tatsächlich das Fahrzeug sich auf Kollisionskurs bezüglich dieses Objekts befindet.

Ferner können insbesondere bei Fahrzeuganwendungen Ausrichtungsprobleme durch unterschiedliche Beladungszustände des Fahrzeugs entstehen, da in diesem Fall das fahrzeugfeste Koordinatensystem verkippt wird, ohne dass der Sensor diese Verkippung mitmachen soll, um eine gleichbleibende Erfassung der Fahrzeugumgebung zu gewährleisten. Mittels geeigneter Verstelleinrichtungen, wie sie beispielsweise im Automobilbereich von der automatischen Leuchtweitenregelung her bekannt sind, kann eine derartige Fehlausrichtung des Sensors bezüglich des Fahrzeugs kompensiert werden.

Um das Ausmaß und die Richtung einer erforderlichen Kompensation bestimmen zu können, muss jedoch die tatsächliche Ausrichtung des Sensors, d.h. die Abweichung der Abtastebene von deren Sollausrichtung, bekannt sein.

Aus US-A-2001/0024171 ist eine Vorrichtung zum Bestimmen dieser Ausrichtung bekannt, die den Merkmalen des Oberbegriffs des vorliegenden Anspruchs 16 entspricht.

Aufgabe der Erfindung ist es, eine Möglichkeit zu schaffen, die Ausrichtung eines Sensors bezogen auf einen Gegenstand, an dem der Sensor angebracht ist, auf möglichst einfache Weise und mit möglichst großer Genauigkeit zu bestimmen, wobei dies insbesondere automatisch und schnell sowie bei Fahrzeuganwendungen auch während des Fahrbetriebs und dabei derart möglich sein soll, dass die normale Umgebungserfassung mittels des Sensors durch die Ausrichtungsbestimmung nicht beeinträchtigt wird.

Die Lösung dieser Aufgabe erfolgt erfindungsgemäß durch die Merkmale des unabhängigen Verfahrensanspruchs und insbesondere dadurch, dass zur Bestimmung der Sensorausrichtung die Lage der Abtastebene im Raum ermittelt wird, indem auf einer gegenstandsfesten, im Sichtbereich des Sensors liegenden Prüffläche die Lage wenigstens eines Abtaststrahlflecks bezogen auf eine vorgegebene Sollausrichtung der Abtastebene relativ zu der Prüffläche bestimmt wird.

Erfindungsgemäß ist wenigstens eine gegenstandsfeste, bei Fahrzeuganwendungen also fahrzeugfeste, Prüffläche vorgesehen, die derart ausgelegt ist, dass sie die Bestimmung der momentanen Lage der Abtastebene des Sensors bezüglich einer gewünschten Sollausrichtung gestattet. Dies erfolgt erfindungsgemäß dadurch, dass auf der Prüffläche die Lage wenigstens eines Abtaststrahlflecks bestimmt und mit der Sollausrichtung verglichen wird. Der Abtaststrahlfleck entsteht dadurch, dass die auf der Prüffläche auftreffenden Abtaststrahlen des Sensors aufgrund ihrer Aufweitung jeweils einen ausgedehnten Fleck oder Spot von endlicher Größe erzeugen, wobei die Fleckgröße von der Entfernung zwischen dem Sensor und der Prüffläche abhängig ist.

Die vom Sensor verwendete Strahlung, insbesondere Laserstrahlung, kann im für das menschliche Auge sichtbaren Wellenlängenbereich, jedoch auch außerhalb dieses Bereiches und z.B. im IR-Bereich liegen.

Wenn im Folgenden anstelle von "Strahlung" der Begriff "Licht" verwendet wird, so soll damit keine Einschränkung des erfindungsgemäß möglichen Wellenlängenbereiches für die Abtaststrahlen gemeint sein. Die Erzeugung der Abtaststrahlen erfolgt beispielsweise mittels einer Laserdiode, die auf einen während des Abtastbetriebs rotierenden, auch als Spiegelrad bezeichneten Drehspiegel gerichtet ist, wodurch der von der Laserdiode ausgesandte Lichtstrahl nacheinander in unterschiedliche, beispielsweise jeweils um 1° voneinander beabstandete Winkelrichtungen abgelenkt wird und die Gesamtheit der auf diese Weise ausgesandten Abtaststrahlen eine Abtastebene des Sensors festlegen.

Durch Verwendung mehrerer Laserdioden und/oder geeigneter Strahlungsumlenkeinrichtungen kann die Aussendung von Abtaststrahlen auch in mehreren Abtastebenen gleichzeitig oder zeitversetzt erfolgen. Alle der im Folgenden erläuterten Möglichkeiten zur erfindungsgemäßen Ausrichtungsbestimmung lassen sich auch auf Sensoren anwenden, die jeweils mit einer Mehrzahl von Abtastebenen arbeiten, indem die jeweils für die erfindungsgemäße Ausrichtungsbestimmung vorgesehenen Einrichtungen entsprechend ergänzt und/oder angepasst werden.

Wie aus den nachstehenden Erläuterungen hervorgeht, kann die erfindungsgemäße Ausrichtungsbestimmung entweder mittels einer optoelektronischen Nachweiseinrichtung, mit der zumindest ein auch als Sendespot bezeichneter Abtaststrahlfleck auf der Prüffläche nachgewiesen wird, oder mittels der sensoreigenen Empfangseinrichtung bzw. dem Empfangspfad des Sensors erfolgen, indem von der Prüffläche stammende, in erfindungsgemäßer Weise erzeugte Strahlung durch den Sensor selbst nachgewiesen wird. Dabei kann die Prüfflächenstrahlung entweder mittels der vom Sensor selbst ausgesandten Abtaststrahlung - in diesem Fall bestimmt der Sensor seine Ausrichtung bezüglich des Gegenstands also vollständig selbst - oder mittels sensorfremder Strahlungsquellen erzeugt werden.

Wenn eine optoelektronische Nachweiseinrichtung verwendet wird, dann sind deren strahlungsempfindlichen Nachweiskomponenten in der Prüffläche angeordnet bzw. wird die Prüffläche von den strahlungsempfindlichen Nachweiseinrichtungen gebildet. Im Fall der Verwendung des Sensors zum Nachweis der von der Prüffläche stammenden Strahlung ist als Prüffläche im Sinne der Erfindung derjenige Bereich, von dem die mittels des Sensors nachzuweisende Strahlung emittiert wird, zu verstehen.

Um Verkippungen und Verschiebungen des Sensors um alle in Frage kommenden Achsen und in allen in Frage kommenden Richtungen bestimmen zu können, ist erfindungsgemäß bevorzugt vorgesehen, dass die Bestimmung der Lage zumindest eines Abtaststrahlflecks jeweils auf wenigstens zwei in einem vorgegebenen Winkelabstand angeordneten Prüfflächen erfolgt. Der Winkelabstand zwischen den beiden Prüfflächen beträgt vorzugsweise 90°.

In einer bevorzugten Variante der Erfindung wird als Prüffläche eine im Vergleich zum Abtaststrahlfleck große ortsauflösende optoelektronische Nachweiseinrichtung verwendet, mit der vorzugsweise die Lage genau eines Abtaststrahlflecks auf der Prüffläche bestimmt wird.

Dabei kann vorgesehen sein, dass mittels der ortsauflösenden optoelektronischen Nachweiseinrichtung zusätzlich zur Lage des Abtaststrahlflecks aus dessen Intensität die Strahlungsleistung des Sensors bestimmt wird. Auf diese Weise kann ein eventuell im Laufe der Zeit erfolgendes Abfallen der Sendeleistung des Sensors festgestellt werden.

Gemäß einer weiteren Variante der Erfindung wird die Orientierung einer von mehreren Abtaststrahlflecken gebildeten Abtastlinie auf der Prüffläche bezogen auf die Sollausrichtung bestimmt. Als Abtastlinie ist eine gedachte Gerade zu verstehen, die durch die nacheinander in einem der Winkelauflösung des Sensors entsprechenden Abstand voneinander durch die ausgesandten Abtaststrahlen auf der Prüffläche erzeugten Sendespots verläuft.

Besonders bevorzugt ist es, wenn die Orientierung der Abtastlinie mittels eines auf der Prüffläche vorgesehenen Linienmusters bestimmt wird, das zumindest zeitweise mittels des Sensors nachweisbare Strahlung emittiert.

Vorzugsweise umfasst das Linienmuster mehrere Prüflinien, von denen wenigstens zwei Prüflinien nicht parallel zueinander verlaufen oder die parallel zueinander mit paarweise unterschiedlichen Abständen verlaufen. Bei einem besonders bevorzugten Linienmuster sind die Prüflinien N-, M-, V- oder W-förmig angeordnet, wobei jedoch grundsätzlich auch andere Linienmusterformen in Frage kommen.

Durch die relative Anordnung der Prüflinien können die Lage der Abtastebene sowie der - bei Fahrzeuganwendungen bevorzugt mit einer Fahrzeuglängsachse zusammenfallende - Nullpunkt des Abtastwinkels, d.h. die Richtung des 0°-Schusses - derart codiert werden, dass nur bei korrekt ausgerichtetem Sensor die leuchtenden, d.h. mittels des Sensors nachweisbare Strahlung emittierenden, Prüflinien in einer erwarteten Winkelrichtung bzw. zu einem erwarteten Zeitpunkt mittels der Empfangseinrichtung des Sensors nachgewiesen werden, während bei einer Fehlausrichtung des Sensors in Abhängigkeit von der Betriebsweise des Linienmusters dessen Prüflinien entweder nicht oder bei falschen, d.h. nicht einer korrekten Sensorausrichtung entsprechenden, Winkelrichtungen bzw. Zeitpunkten detektiert werden.

Vorzugsweise wird die Strahlungsquelle für das Linienmuster mit der Abtastbewegung des Sensors synchronisiert, und zwar bevorzugt derart, dass vom Linienmuster Strahlung nur unter für die Sollausrichtung erwarteten Winkelrichtungen und/oder zu für die Sollausrichtung erwarteten Zeitpunkten emittiert wird.

Dies ist gewissermaßen automatisch der Fall, wenn als Strahlungsquelle für das Linienmuster die sensoreigene, zur Aussendung der Abtaststrahlen dienende Sendeeinrichtung verwendet wird, d.h. die Prüflinien praktisch mittels des Sensors zum Leuchten gebracht werden. Im Fall der Verwendung von sensorfremden Strahlungsquellen für das Linienmuster kann der Trigger für diese Fremdbeleuchtung beispielsweise aus dem Winkelgeber des Sensors abgeleitet werden.

Wenn als Strahlungsquelle für das Linienmuster eine sensorfremde Strahlungsquelle verwendet wird, dann ist vorzugsweise vorgesehen, dass zumindest in dem der Prüffläche entsprechenden Winkelbereich des Sensors die Aussendung von Abtaststrahlen durch den Sensor unterbleibt.

Für den Fall, dass als Strahlungsquelle für das Linienmuster eine zur Aussendung der Abtaststrahlen dienende Sendeeinrichtung des Sensors verwendet wird, ist bevorzugt vorgesehen, dass das Linienmuster mittels einer gegenstandsfesten optischen Einrichtung aus den Abtaststrahlen erzeugt wird.

In einem einfachen Fall kann es sich bei der optischen Einrichtung um linien- oder streifenförmige Reflektoren handeln, welche die Abtaststrahlen direkt zurück auf die Empfangseinrichtung des Sensors reflektieren und auf diese Weise selbst die Prüflinien bilden. Diese Variante kann beispielsweise zum Einsatz kommen, wenn die geometrischen Verhältnisse der Sensorkonstruktion eine derartige direkte Reflexion zulassen, d.h. wenn sich Sender und Empfänger "sehen" können bzw. sich der Sendespot und der Empfangsspot des Sensors zumindest bereichsweise überlappen.

Bevorzugt befindet sich im am Gegenstand montierten Zustand die Prüffläche und damit das Linienmuster in einem so genannten Nahbereich des Sensors, in dem sich aufgrund der noch vergleichsweise gering ausgeprägten Strahlaufweitung der Sender und der Empfänger des Sensors nicht "sehen" können, wobei dies sowohl für koaxiale als auch für biaxiale Anordnungen von Sender und Empfänger gilt.

In einem derartigen Fall ist erfindungsgemäß vorzugsweise vorgesehen, dass die vom Sender ausgesandten Abtaststrahlen mittels einer gegenstandsfesten optischen Einrichtung derart umgelenkt werden, dass die ausgesandten Abtaststrahlen einerseits und die vom Linienmuster emittierten Empfangsstrahlen andererseits gegeneinander versetzt werden.

Hierbei ist es möglich, dass die zur Erzeugung dieses Versatzes im Strahlengang getroffenen Maßnahmen in vorteilhafter Weise ausgenutzt werden, um das Linienmuster auf relativ einfache Art und Weise zu erzeugen.

Zu diesem Zweck kann die im Strahlengang angeordnete optische Einrichtung gemäß einer Ausführungsform der Erfindung derart ausgebildet sein, dass sie zumindest ein lichtleitendes Element, das austrittsseitig zumindest eine Prüflinie des Linienmusters bildet, und wenigstens ein Streuelement umfasst, über das die vom Sensor ausgesandten Abtaststrahlen in das lichtleitende Element eingespeist werden können.

Eine insbesondere im Hinblick auf die Herstellung der optischen Einrichtung einfache und kostengünstige Möglichkeit ergibt sich, wenn das lichtleitende Element und das Streuelement an einem einstückigen Körper ausgebildet sind, der z.B. im Kunststoffspritzgussverfahren hergestellt werden kann.

Des Weiteren kann vorgesehen sein, dass die optische Einrichtung ein strahlungsdurchlässiger, insbesondere einstückiger, bevorzugt im Kunststoffspritzgussverfahren herstellbarer Körper ist, der mittels der vom Sensor ausgesandten Abtaststrahlen oder mittels sensorfremder Strahlungsquellen zumindest im Wesentlichen als Ganzes zur Emission von Strahlung bringbar ist und als Strahlungsquelle für das Linienmuster dient, wobei im Strahlengang vor oder hinter der optischen Einrichtung wenigstens eine Blende oder Maske mit zumindest eine Prüflinie des Linienmusters bildenden strahlungsdurchlässigen Bereichen angeordnet ist.

Hierdurch bildet die optische Einrichtung bei Bestrahlung einen Leuchtkörper, dem im Strahlengang eine das Linienmuster bildende Maske oder Blende vorgelagert werden kann, um für die Erzeugung des Linienmusters zu sorgen.

Ferner kann als optische Einrichtung wenigstens ein Umlenkprisma, mit dem einfallende Abtaststrahlen parallel versetzt reflektierbar sind, sowie zumindest eine im Strahlengang vor oder hinter dem Umlenkprisma angeordnete Maske oder Blende mit zumindest eine Prüflinie des Linienmusters bildenden strahlungsdurchlässigen Bereichen vorgesehen sein.

Die Lösung der der Erfindung zugrunde liegenden Aufgabe erfolgt außerdem durch die Merkmale des unabhängigen Vorrichtungsanspruchs und insbesondere dadurch, dass im Sichtbereich des Sensors zumindest eine gegenstandsfeste Prüffläche angeordnet ist, auf der die Lage wenigstens eines Abtaststrahlflecks bezogen auf eine vorgegebene Sollausrichtung der Abtastebene relativ zu der Prüffläche bestimmbar ist.

Vorzugsweise ist die Prüffläche an einer Begrenzungswand vorgesehen, die im am Gegenstand montierten Zustand in einem zur Umgebungserfassung vorgesehenen Teil des Sichtbereiches des Sensors gelegen ist und zusammen mit einer strahlungsdurchlässigen Abdeckung einen Ein- oder Anbauraum des Sensors am Gegenstand zumindest bereichsweise begrenzt.

Wenn die Prüffläche in Form einer ortsauflösenden, bevorzugt im Vergleich zum Abtaststrahlfleck großen optoelektronischen Nachweiseinrichtung, insbesondere in Form einer Kamera, vorgesehen ist, dann kann erfindungsgemäß die Prüffläche von einem optoelektronischen Sensor-Array, insbesondere einer kameraeigenen CCD-Matrix, wie sie beispielsweise von vergleichsweise kostengünstigen Videokameras oder Web-Cam-Anwendungen her bekannt ist, einem CMOS-Array, einem APD-Array oder einem PIN-Dioden-Array gebildet werden. Es ist auch möglich, die Prüffläche durch ein Array aus lichtleitenden Elementen, beispielsweise Glasfasern, zu bilden.

Für den Fall, dass die Prüffläche ein Linienmuster aufweist, das zur zumindest zeitweisen Emission von mittels des Sensors nachweisbarer Strahlung ausgebildet ist, kann erfindungsgemäß vorgesehen sein, dass die Prüflinien des Linienmusters von selbstleuchtenden Strahlungsquellen gebildet werden, beispielsweise von LEDs, Lichtleitern oder Glasfasern.

Des Weiteren kann eine Steuereinrichtung vorgesehen sein, mit der das Linienmuster bildende oder erzeugende Strahlungsquellen in Abhängigkeit von der Abtastbewegung des Sensors aktivierbar sind, und zwar vorzugsweise derart, dass vom Linienmuster Strahlung nur unter für die Sollausrichtung erwarteten Winkelrichtungen und/oder zu für die Sollausrichtung erwarteten Zeitpunkten emittiert wird. Auf diese Weise lässt sich eine Synchronisation der Strahlungsquellen für das Linienmuster mit dem Sensor-Abtastbetrieb realisieren.

Die Erfindung betrifft ferner ein Verfahren zum Kompensieren einer Fehlausrichtung eines an einem Gegenstand angebrachten optoelektronischen Sensors, wobei die Momentanausrichtung des Sensors mittels des erfindungsgemäßen Verfahrens zur Ausrichtungsbestimmung ermittelt und mit einer vorgegebenen Sollausrichtung verglichen wird, und wobei im Fall einer Abweichung der Momentanausrichtung von der Sollausrichtung diese Fehlausrichtung des Sensors durch Verstellen des Sensors relativ zum Gegenstand bevorzugt automatisch kompensiert wird.

Des Weiteren betrifft die Erfindung ein Fahrzeug mit wenigstens einem fahrzeugfesten optoelektronischen Sensor zur Erfassung der Fahrzeugumgebung und mit einer erfindungsgemäßen, dem Sensor zugeordneten Vorrichtung zum Bestimmen der Sensorausrichtung.

Bevorzugte Ausführungsformen der Erfindung sind auch in den Unteransprüchen, der Beschreibung sowie der Zeichnung angegeben.

Die Erfindung wird im Folgenden beispielhaft unter Bezugnahme auf die Zeichnung beschrieben. Es zeigen:
- Fig. 1a - 1c: mögliche Fehlausrichtungen eines fahrzeugfesten Sensors,
- Fig. 2: schematisch in einer Draufsicht eine mögliche Anordnung eines Sensors an einem Fahrzeug gemäß der Erfindung,
- Fig. 3a und 3b: schematisch die Verwendung ortsauflösender Nachweiseinrichtungen für die erfindungsgemäße Ausrichtungsbestimmung,
- Fig. 4a und 4b: schematisch eine mögliche Fehlausrichtung des Sensors von Fig. 3a und 3b,
- Fig. 5: schematisch eine weitere Ausführungsform der Erfindung, bei der die Fehlausrichtung des Sensors mit Hilfe von Linienmustern bestimmt wird,
- Fig. 6: eine Darstellung zur Erläuterung der erfindungsgemäßen Ausrichtungsbestimmung mit Hilfe eines Linienmusters,
- Fig. 7: schematisch in einer Draufsicht eine erfindungsgemäße Möglichkeit zur Erzeugung eines Linienmusters,
- Fig. 8: schematisch in einer Seitenansicht eine weitere erfindungsgemäße Möglichkeit zur Erzeugung eines Linienmusters,
- Fig. 9: die Erzeugung eines Strahlversatzes mittels eines Prismas zur Verwendung bei der erfindungsgemäßen Ausrichtungsbestimmung,
- Fig. 10: die erfindungsgemäße Verwendung eines Prismas zur Erzeugung eines Linienmusters in einer Frontalansicht, und
- Fig. 11: die Anordnung von Fig. 10 in einer Draufsicht.

Bevor nachstehend bevorzugte Ausführungen der Erfindung näher erläutert werden, sollen vorab einige Voraussetzungen definiert werden, die in der Praxis erfüllt sein sollten.

Zunächst sollte der Sensor bzw. Laserscanner bezüglich seines internen Koordinatensystems abgeglichen bzw. justiert sein. Die Winkelposition des vorzugsweise verwendeten Drehspiegels bzw. Spiegelrades des Scanners sollte sich über einen beispielsweise in Form einer Codescheibe vorgesehenen Winkelsensor mit hoher Genauigkeit bestimmen lassen. Hierzu sollte der Nullindex bzw. die Richtung des 0°-Schusses bezüglich der tatsächlichen Stellung des Drehspiegels kalibriert sein. Die Form und der Verlauf der Abtastfläche müssen definiert sein und den jeweils spezifizierten Werten entsprechen.

Ferner sollten alle am Fahrzeug anzubringenden Bezugskomponenten hinsichtlich des fahrzeugfesten Bezugskoordinatensystems mit hoher Reproduzierbarkeit hinsichtlich der räumlichen Anordnung sowie der Winkelstellung montiert werden können. Vorzugsweise wird der Scanner derart am Fahrzeug montiert, dass ein Teil des Sichtbereiches oder -feldes des Sensors im Fahrzeug liegt, so dass der für die eigentliche Umgebungserfassung bzw. Entfernungsmessung nutzbare Winkelbereich eingeschränkt wird. In dem nicht für die Umgebungserfassung nutzbaren "toten Winkelbereich", der im Folgenden auch als Prüfbereich bezeichnet wird, erfolgt vorzugsweise die Bestimmung der Scannerausrichtung bezüglich des Fahrzeuges bzw. des Ein- oder Anbauortes am Fahrzeug. Dabei ist es bevorzugt, wenn der Einbauraum zum Fahrzeug hin abgeschlossen und beispielsweise durch den Karosserieaufbau des Fahrzeugs z.B. in Form von Blechwänden definiert ist.

Für den Fall, dass die erzielbaren mechanischen Genauigkeiten des Fahrzeugs den Anforderungen an eine positionsgenaue Montage des Sensors nicht genügen, sollten die Abweichungen zwischen dem Koordinatensystem des Scanners, dem Koordinatensystem des Fahrzeugs sowie der Anordnung der erwähnten Bezugskomponenten über eine Kalibrierung mit Hilfe von definierten externen Zielen ermittelt werden. Die dabei ermittelten Werte dienen dann während des Fahrzeugbetriebs als Bezugswerte für die Bestimmung der Lageabweichung des Scanners bezüglich seines Einbauortes. Die Ermittlung dieser Bezugswerte ist nicht Gegenstand der vorliegenden, sondern einer weiteren Erfindung, die in einer am gleichen Tag wie die vorliegende Anmeldung beim Deutschen Patent- und Markenamt hinterlegten deutschen Patentanmeldung (Anwaltsaktenzeichen: S 8346) beschrieben ist.

Wenn der Laserscanner gezielt verkippt wird, beispielsweise zur Kompensation einer Fehlausrichtung, dann sollte die entsprechende Kippachse durch den bezogen auf Spiegelverkippungen ortsfesten Drehmittelpunkt des Drehspiegels des Scanners verlaufen, da anderenfalls zusätzlich die resultierenden, auch als Offsets bezeichneten Abstandsänderungen bezüglich der fahrzeugfesten Bezugskomponenten berücksichtigt werden müssten.

Die Fig. 1a - 1c zeigen mögliche Fehlausrichtungen eines an einem Fahrzeug 11 montierten Laserscanners 13, wobei dessen Einbauort am Fahrzeug 11 rein beispielhaft gewählt ist und grundsätzlich jede beliebige Position am Fahrzeug 11 einnehmen kann.

Fig. 1a zeigt eine Verkippung des Scanners 13 relativ zum Fahrzeug 11 um eine in Längsrichtung des Fahrzeugs 11 verlaufende Achse um einen Verkippwinkel α. Eine derartige Verkippung führt zu einer Auslenkung der Abtastebene 17 des Scanners 13 bezüglich einer Horizontalebene, wie sie auch von Wankbewegungen des Fahrzeugs 11 hervorgerufen werden würde.

In Fig. 1b ist eine Verkippung des Scanners 13 relativ zum Fahrzeug 11 um eine quer zur Fahrzeuglängsachse verlaufende Achse um einen Winkel β gezeigt. Hierdurch ergibt sich eine Auslenkung der Abtastebene 17 des Scanners 13 bezüglich einer Horizontalebene, wie sie auch durch Nickbewegungen des Fahrzeugs 11 hervorgerufen werden würde.

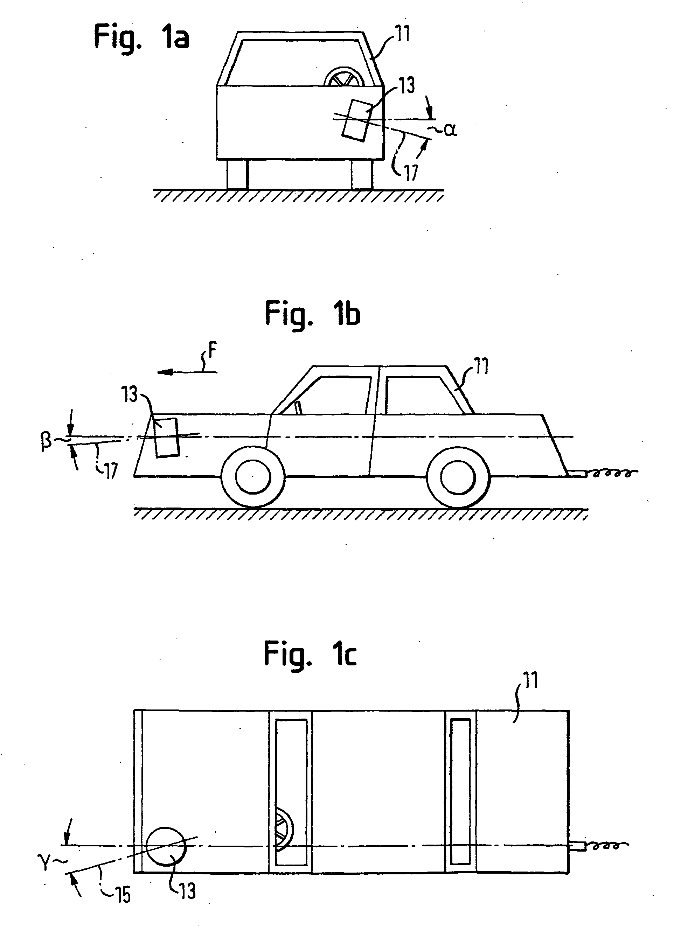

Fig. 1c zeigt eine weitere Fehlausrichtung des Scanners 13, bei der die von den Abtaststrahlen gebildete Abtastebene des Scanners 13 um die vertikal verlaufende Hochachse des Scanners 13 derart verdreht ist, dass der als so genannter 0°-Schuss ausgesandte Abtaststrahl 15 unter einem Winkel γ zur Fahrzeuglängsrichtung ausgesandt wird, d.h. die Abtastebene des Scanners 13 verläuft zwar nach wie vor parallel zu einer Horizontalebene, ist jedoch gegenüber einem fahrzeugfesten Koordinatensystem verdreht.

Bei den vorstehenden erläuterten Fehlausrichtungen wurde davon ausgegangen, dass die Sollausrichtung des Scanners 13 relativ zum Fahrzeug 11 derart gewählt ist, dass die Abtastebene 17 des Scanners 13 horizontal und der 0°-Schuss in der durch einen Pfeil in Fig. 1b angedeuteten Fahrtrichtung F des Fahrzeugs 11 und damit parallel zur Fahrzeuglängsrichtung verläuft.

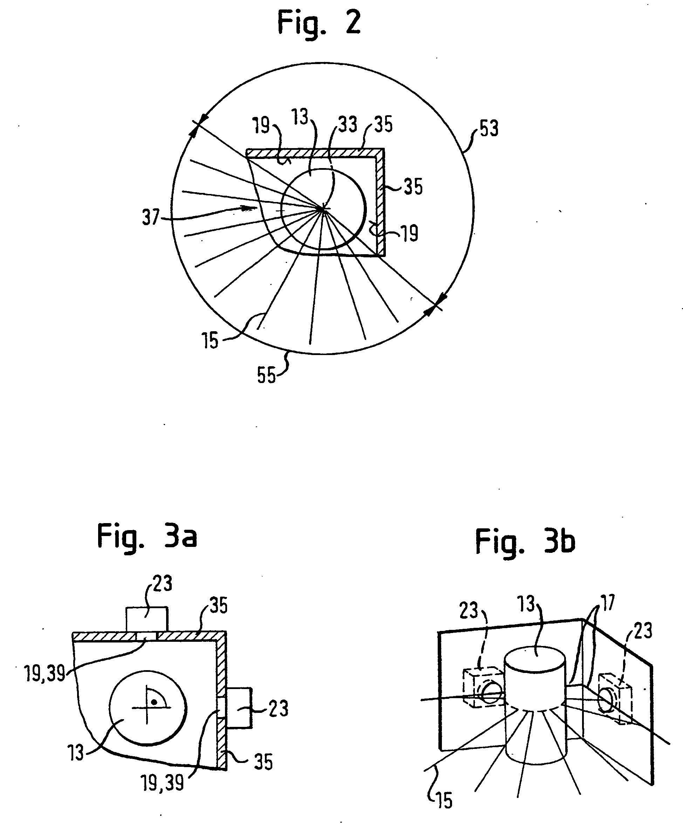

Fig. 2 zeigt, dass der 360° umfassende Sichtbereich des Scanners 13 in dem hier dargestellten Beispiel durch zwei einen Winkel von 90° einschließende Begrenzungswände 35 in einen Prüfbereich 53 und einen zur Umgebungserfassung zur Verfügung stehenden Erfassungsbereich 55 unterteilt ist, die jeweils etwa 180° umfassen. Die Wände 35 begrenzen gemeinsam mit einer Abdeckung 37, die für die vom Scanner 13 ausgesandten, bei gedachter rückwärtiger Verlängerung von einer Sensorachse bzw. der Drehachse 33 des Drehspiegels bzw. Spiegelrades des Scanners 13 ausgehenden Abtaststrahlen 15 durchlässig ist, den Einbauraum des Scanners 13 am Fahrzeug 11.

Die dem Scanner 13 zugewandten Innenseiten der Begrenzungswände 35 sind bereichsweise als Prüfflächen 19 im Sinne der Erfindung ausgebildet, wie im Folgenden näher erläutert wird.

Fig. 3a und 3b zeigen die Anordnung zweier in einem Winkelabstand von 90° zueinander angeordneter Kameras 23, die jeweils eine die Prüffläche 19 bildende kameraeigene CCD-Matrix 39 aufweisen und damit als ortsauflösende Nachweiseinrichtung dienen, mit der die Lage eines Abtastlichtfleck, der entsteht, wenn ein Abtastlichtstrahl 15 auf die Prüffläche 19 bzw. die CCD-Matrix 39 auftrifft, ermittelt werden kann. Alternativ können auch andere ortsauflösende Sensoren oder Detektoren verwendet werden.

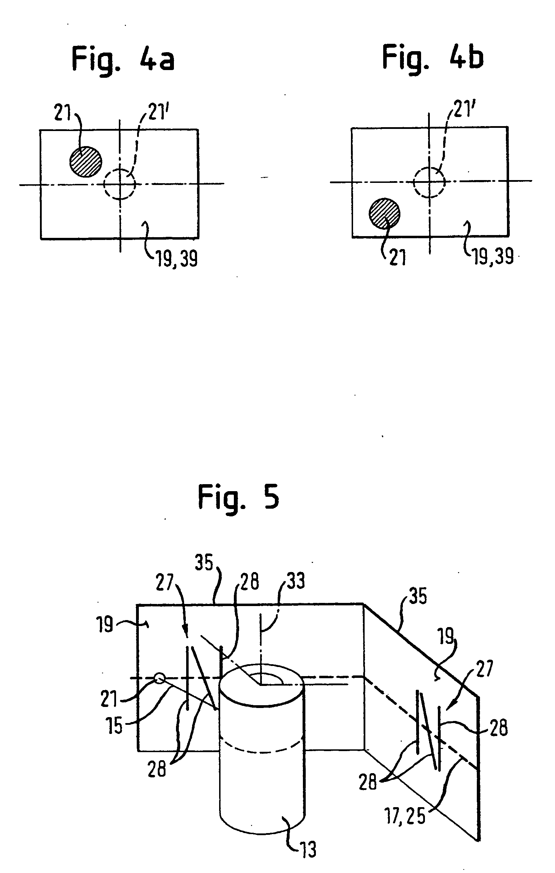

Die Kameras 23 sind bezüglich des Scanners 13 derart angeordnet, dass bei korrekter Ausrichtung des Scanners 13 dessen Abtastebene 17 jeweils mittig auf der CCD-Matrix 39 liegt, so dass - wie Fig. 4a und 4b zeigen - ein in Sollrichtung auftreffender, gestrichelt dargestellter Abtastlichtfleck 21' jeweils in der Mitte der in diesem Ausführungsbeispiel von der CCD-Matrix 39 gebildeten Prüffläche 19 liegen würde. Die Größe der CCD-Matrix 39 und die Daten der Empfangsoptik der Kamera 39 sind so groß gewählt, dass zumindest ein korrekt ausgerichteter Abtastlichtfleck 21' vollständig nachgewiesen werden kann.

Durch die vollständig ausgefüllten Kreise in Fig. 4a und 4b ist eine mögliche Fehlausrichtung des Scanners 13 bezüglich des Fahrzeugs angedeutet. Der Scanner 13 ist um die Hochachse verdreht sowie um beide Achsen verkippt, d.h. unter Bezugnahme auf Fig. 1a - 1c gilt: α, β, γ ≠ 0°.

Der Einsatz von zwei in einem Winkelabstand angeordneten Kameras 23 (Fig. 4a zeigt die CCD-Matrix 39 der einen Kamera 23 von Fig. 3a und 3b, während Fig. 4b die CCD-Matrix 39 der anderen Kamera 23 zeigt) dient dazu, alle in der Praxis möglichen Fehlausrichtungen des Scanners 13 (Verdrehen um die Hochachse, Verkippen um eine Längsachse, Verkippen um eine Querachse sowie beliebig gerichtete Translation der Scanner- bzw. Drehspiegelachse) vollständig beschreiben zu können.

Die Empfangsaperturen und Brennweiten der Kameras 23 sind bevorzugt an die erwarteten Fehlausrichtungen bzw. Lageabweichungen des Scanners 13 angepasst. Die Messauflösung wird im Wesentlichen durch die Pixelzahl der CCD-Matrix oder - wenn ein Array aus lichtleitenden Elementen wie beispielsweise Glasfasern als ortsauflösender Lagedetektor verwendet wird - durch die Anzahl der lichtleitenden Elemente bestimmt. Auf der Basis der gewonnenen Bilddaten können die Lageabweichungen mittels eines sensorfremden Rechners oder eines in den Scanner 13 integrierten Rechners automatisch berechnet werden.

Zusätzlich kann durch eine Integration der von den einzelnen Pixeln bzw. Lichtleitern ermittelten Strahlungsleistungen auf die insgesamt vom Scanner 13 in einem Abtaststrahl 15 ausgesandte Strahlungsleistung geschlossen werden. Auf diese Weise lässt sich ein eventuell im Laufe der Zeit erfolgender Abfall der Strahlungsleistung des Scanners 13 feststellen.

Wenn von einer Fehlausrichtung des Scanners 13 bzw. einer Lageabweichung eines Abtastlichtflecks 21 von einer Sollausrichtung bzw. einem die Solllage einnehmenden Abtastlichtfleck 21' (vgl. z.B. Fig. 4a und 4b) die Rede ist, dann bezieht sich dies stets auf eine bestimmte Winkelrichtung bzw. einen bestimmten Zeitpunkt, in die bzw. zu dem der betreffende Abtaststrahl 15 ausgesandt wird. Eine Lageabweichung liegt folglich vor, wenn für einen jeweils betrachteten Abtaststrahl 15 der zugehörige Abtastlichtfleck 21 auf der Prüffläche 19 nicht die für eine korrekte Sensorausrichtung erwartete Solllage einnimmt, wobei nicht ausgeschlossen ist, dass der Abtastlichtfleck eines vorhergehenden oder eines nachfolgenden Abtaststrahls die "Solllage" des betrachteten Abtastlichtflecks einnimmt. Dies wäre dann ebenfalls als eine Fehlausrichtung des Sensors zu werten, da die Aussage, ob eine Lageabweichung vorliegt oder nicht, nur in Bezug auf einen bestimmten Abtaststrahl und damit auf eine bestimmte Winkelrichtung bzw. einen bestimmten Aussendezeitpunkt einen Sinn ergibt.

Fig. 5 zeigt eine alternative Ausführungsform der Erfindung, bei der wiederum der Einbauraum des Scanners 13 von zwei einen rechten Winkel einschließenden Wänden 35 begrenzt ist. Anstelle von in die Wände 35 integrierten Strahlungsnachweiseinrichtungen wird hier die sensoreigene Empfangseinrichtung zur Bestimmung der Orientierung der Abtastebene 17 bzw. der Lage der Abtastlichtflecke 21 genutzt.

Hierzu sind an den Begrenzungswänden 35 in Bereichen, die Prüfflächen 19 im Sinne der Erfindung bilden, im Vergleich zu den Sendespots 21 bzw. Empfangsspots des Scanners 13 große Linienmuster 27 vorgesehen. In dem dargestellten Ausführungsbeispiel besteht jedes Linienmuster 27 aus drei Prüflinien 28, die N-förmig angeordnet sind. Wie nachstehend näher erläutert wird, wird von den Prüflinien 28 entweder ununterbrochen oder zumindest dann Strahlung emittiert, wenn bei korrekter Ausrichtung des Scanners 13 dessen Empfangseinrichtung bzw. der Empfangsspot jeweils zu dem erwarteten Zeitpunkt auf die betreffende Prüflinie 28 ausgerichtet ist, d.h. es wird von den Prüflinien 28 jeweils zumindest dann Strahlung emittiert - und folglich mittels der Empfangseinrichtung des Scanners 13 nachgewiesen, d.h. von dem Empfangsspot "gesehen" -, wenn dies für eine korrekte Ausrichtung des Scanners 13 erwartet wird.

Bei korrekter Ausrichtung des Scanners 13 werden die Linienmuster 27 von dem wandernden Abtastlichtfleck 21 entlang eines vorgegebenen Weges durchlaufen, d.h. die Abtastebene 17 des Scanners 13 weist eine definierte Sollorientierung relativ zu den Linienmustern 27 auf.

Der Grundansatz dieser Ausführungsform der Erfindung ist der winkelabhängige Nachweis der Prüflinien 28 mittels des Empfangspfades des Scanners 13. Dabei ist die Blickrichtung des Scanners 13 über einen hochauflösenden internen Drehgeber, z.B. in Form einer Codescheibe, codiert. Durch die relative Anordnung der Prüflinien 28 sind die Lage der Abtastebene 17 im Raum sowie der Nullpunkt bzw. der 0°-Schuss des Abtastwinkels des Scanners 13 codiert.

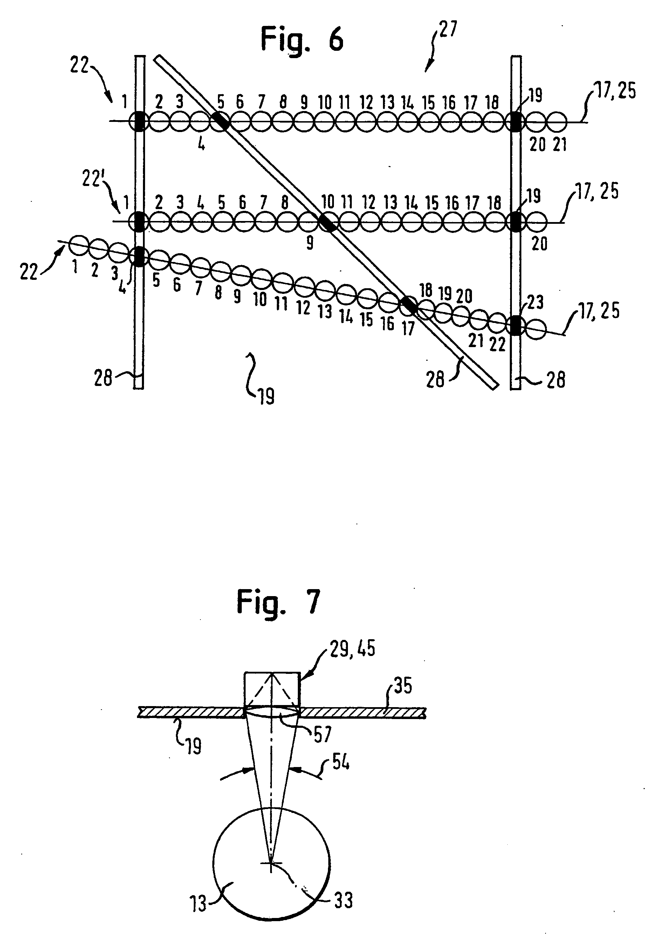

Wie aus Fig. 6 hervorgeht, ergeben sich, wenn der Scanner 13 bezüglich der Linienmuster 27 - und damit bezüglich des Fahrzeugs - korrekt ausgerichtet ist, was der mittleren Abtastlinie 25 entspricht, zum einen ein fester Erwartungswinkel für das mit "1" bezeichnete erste Empfangssignal sowie erwartete Winkelabstände zu den folgenden Empfangssignalen "2", "3", "4" usw.. Diese Erwartungswerte unterscheiden sich von den Werten, die bei fehlausgerichtetem Scanner 13 erhalten werden, was in Fig. 6 beispielhaft durch die obere und die untere Abtastlinie 25 angedeutet ist.

Der bezüglich der Prüflinien 28 kleine Empfangsspot 22 des Scanners 13 (der korrekt ausgerichtete Scanner 13 wird durch den Empfangsspot 22' repräsentiert) wandert in Abhängigkeit von der Drehstellung des Spiegelrades des Scanners 13 über das Linienmuster 27, so dass mittels des Empfangspfades des Scanners 13 winkelcodiert das Vorhandensein von Strahlung erfasst werden kann. Bei den Spots 22 handelt es sich um die Empfangsspots des Scanners 13, d.h. um diejenigen Bereiche auf der Prüffläche 19, die der Scanner 13 in der jeweiligen Winkelstellung mit seiner Empfangseinrichtung "sieht". Die Sendeeinrichtung des Scanners 13 kann entweder deaktiviert sein oder dazu genutzt werden, die Prüflinien 28 "zum Leuchten zu bringen". Auf verschiedene Möglichkeiten, über die Prüflinien 28 Strahlung zu emittieren, wird an anderer Stelle näher eingegangen.

Wie vorstehend bereits erwähnt, verläuft in dem in Fig. 6 dargestellten Beispiel bei korrekter Ausrichtung des Scanners 13 bezüglich des Einbauraumes die Abtastebene 17 bzw. die von dieser auf der Prüffläche 19 gebildete Abtastlinie 25 entsprechend der mittleren, durch die Empfangsspots 22' repräsentierten Linie. Unter Bezugnahme auf die Fig. 1a - 1c sowie auf Fig. 2 wird im Folgenden davon ausgegangen, dass die in Fig. 6 dargestellte Prüffläche 19 von der rückwärtigen, senkrecht zur Fahrzeuglängsachse verlaufenden Wand 35 gebildet wird, d.h. die Prüffläche 19 wird benutzt, wenn der Scanner 13 "nach hinten blickt". Fig. 2 bedeutet dann einen Montageort des Scanners 13 entsprechend Fig. 1a - 1c im Bereich des linken vorderen Scheinwerfers, d.h. in Fig. 2 weist die Fahrtrichtung des Fahrzeugs nach links.

In den Winkelstellungen "1", "10" und "19" wird Strahlung detektiert, während in den übrigen Winkelstellungen keine Strahlung auf den Empfänger des Scanners 13 trifft. Die Tatsache, dass in der Winkelstellung "1" Licht empfangen wird, bedeutet, dass der Scanner 13 nicht um die Hochachse verdreht ist, d.h. unter Bezugnahme auf Fig. 1c gilt γ = 0. Ferner befinden sich zwischen dem ersten und dem dritten Empfangssignal siebzehn Winkelschritte, was bedeutet, dass die Abtastebene 17 nicht um die Längsachse, d.h. um den Empfangsstrahl herum, verdreht ist, da anderenfalls der Abstand zwischen dem ersten und dem letzten Empfangssignal größer wäre. Des Weiteren ist die Anzahl der Winkelschritte zwischen dem ersten Empfangssignal (Winkelstellung "1") und dem zweiten Empfangssignal (Winkelstellung "10") einerseits und dem zweiten Empfangssignal (Winkelstellung "10") und dem dritten Empfangssignal (Winkelstellung "19") dieselbe, was bedeutet, dass die Abtastebene 17 nicht verschoben ist.

Eine reine Verkippung der Abtastebene 17 um die Querachse (β ≠ 0, vgl. Fig. 1b) führt zu einer Verschiebung der Abtastlinie 25, wodurch sich beispielsweise die in Fig. 6 obere Abtastlinie 25 ergibt. Strahlung wird nur in den Winkelstellungen "1", "5" und "19" detektiert. Da die Winkelstellungen "1" und "19" gegenüber der Sollausrichtung unverändert sind, hat sich der Scanner 13 folglich weder um die Hoch- noch um die Längsachse verdreht. Allerdings hat sich das Verhältnis aus der Anzahl von Winkelstellungen ohne Empfangssignal zwischen der ersten und der zweiten Prüflinie 28 zu der Anzahl von Winkelstellungen ohne Empfangssignal zwischen der zweiten und der dritten Prüflinie 28 gegenüber der Sollausrichtung proportional zu dem Ausmaß der Verkippung um die Querachse verändert. Aus der Tatsache, dass der Abstand zwischen den ersten beiden Empfangssignalen kleiner - und folglich der Abstand zwischen dem zweiten und dem dritten Empfangssignal größer - geworden ist, kann darauf geschlossen werden, dass die Verkippung der Abtastebene 17 nach oben erfolgt ist, in Fahrtrichtung des Fahrzeugs 11 gesehen (vgl. insbesondere Fig. 1b) der Scanner 13 also mit seiner Abtastebene 17 abweichend von der horizontalen Sollausrichtung schräg nach unten blickt.

Die in Fig. 6 untere Abtastlinie 25 entsteht, wenn der Scanner 13 gleichzeitig um die Hoch-, die Längs- und die Querachse verdreht wird. Ein Empfangssignal ergibt sich hier für die Winkelstellungen "4", "17" und "23". Aus diesen Winkelpositionen, den absoluten Abständen und den Abstandsverhältnissen lässt sich das Ausmaß aller Verkippungen des Sensors 13 mittels der entsprechenden trigonometrischen Beziehungen berechnen.

Wenn gemäß Fig. 5 zwei in einem Winkelabstand von 90° angeordnete Linienmuster 27 verwendet werden, kann eine wesentliche Verbesserung der Genauigkeit erreicht werden. Hierdurch lassen sich außerdem Fehler in den Abständen zwischen dem Scanner 13 und den hier von den Prüflinien 28 gebildeten Bezugskomponenten erkennen.

Optimale Ergebnisse lassen sich erreichen, wenn für jedes Linienmuster 27 die drei Prüflinien 28 mit Hilfe der Empfangseinrichtung des Scanners 13 sauber voneinander getrennt werden können. Die Breite der Prüflinien 28 ist größer als die Lücke zwischen zwei aufeinander folgenden bzw. benachbarten Empfangsspots 22 des Scanners 13. Eine optimale Breite der Prüflinien 28 stellt jeweils der Mittenabstand zwischen zwei aufeinander folgenden Empfangsspots 22 dar.

Die Winkelauflösung ist dabei durch die Auflösung des scannerseitigen Winkelgebers, durch das Größenverhältnis zwischen der Fläche des Empfangsspots 22 einerseits und der Größe des Linienmusters 27 andererseits sowie durch die konkrete Ausgestaltung des Linienmusters 27 bestimmt.

Die Strahlungsquelle zur Erzeugung der leuchtenden Prüflinien 28 kann entweder eine sensorfremde, externe Beleuchtungseinrichtung sein, oder es kann die Sendeeinrichtung des Scanners 13 genutzt werden. In jedem Fall wird der optoelektronische Empfangspfad des Scanners 13 zur Auswertung der Prüflinienpositionen am Fahrzeug 11 verwendet. Wenn eine externe Beleuchtungseinrichtung verwendet wird, dann ist die Sendeeinrichtung des Scanners 13 vorzugsweise innerhalb des Prüfbereiches 53 (vgl. Fig. 2) deaktiviert, um die Lebensdauer der Sendeeinrichtung zu erhöhen und insbesondere Fehlmessungen durch überlagerte erhöhen und insbesondere Fehlmessungen durch überlagerte Lichtsignale aufgrund von Mehrwegreflexionen zu vermeiden.

Bei Verwendung einer sensorfremden Strahlungsquelle kann diese innerhalb des Prüfbereiches 53 entweder ununterbrochen oder gepulst betrieben werden. Während der Umgebungserfassung innerhalb des Erfassungsbereiches 55 (vgl. Fig. 2) sollte diese externe Strahlungsquelle jedoch deaktiviert sein, um die Gefahr zu vermeiden, dass durch Streulicht die Umgebungserfassung bzw. die hierzu erfolgende Entfernungsmessung beeinträchtigt wird. Zum Nachweis der Prüflinien 28 erfolgt im Fall der Verwendung einer im Prüfbereich 53 ununterbrochen betriebenen Strahlungsquelle eine DC-gekoppelte Auswertung des Empfangssignals.

Bei Verwendung einer externen Strahlungsquelle ist deren gepulster Betrieb jedoch bevorzugt, da dies den Vorteil mit sich bringt, dass im Scanner 13 der Empfangs- und Messzweig zur Auswertung der Prüflinien 28 herangezogen werden kann. Die winkelabhängige Überprüfung, ob Empfangsstrahlung vorliegt oder nicht, lässt sich im Empfangspfad mittels selbstverriegelnder Komparatoren realisieren. Die Sendeeinrichtung des Scanners 13 ist innerhalb des Prüfbereiches 53 nicht aktiv. Der Trigger für die externe Beleuchtungseinrichtung wird aus dem Winkelgeber des Scanners 13 abgeleitet. Auch in diesem Fall ist es bevorzugt, wenn die externe Beleuchtungseinrichtung nur innerhalb des Prüfbereiches 53 aktiv ist.

Eine besonders bevorzugte Vorgehensweise besteht darin, dass als Strahlungsquelle für die Prüflinien 28 die Sendeeinrichtung des Scanners 13 verwendet wird. In diesem Fall wird folglich der vollständige Sende- und Empfangspfad des Scanners 13 genutzt. Außerhalb des Scanners 13 werden lediglich passive optische Bauelemente eingesetzt. Der Scanner 13 ermittelt also seine Einbaulage, d.h. seine Ausrichtung bezüglich des Fahrzeugs, vollständig selbst.

In vorteilhafter Weise kann bei entsprechender Ausgestaltung des Scanners 13 der Umstand ausgenutzt werden, dass sich im die Prüfflächen 19 und damit die Linienmuster 27 umfassenden Nahbereich des Scanners 13 der Sender und der Empfänger des Scanners 13 aufgrund der geometrischen Verhältnisse nicht "sehen", d.h. der Sendespot und der Empfangsspot des Scanners 13 überlappen sich innerhalb des Einbauraumes nicht, wobei dies sowohl für koaxiale als auch für biaxiale Anordnungen von Sender und Empfänger gilt.

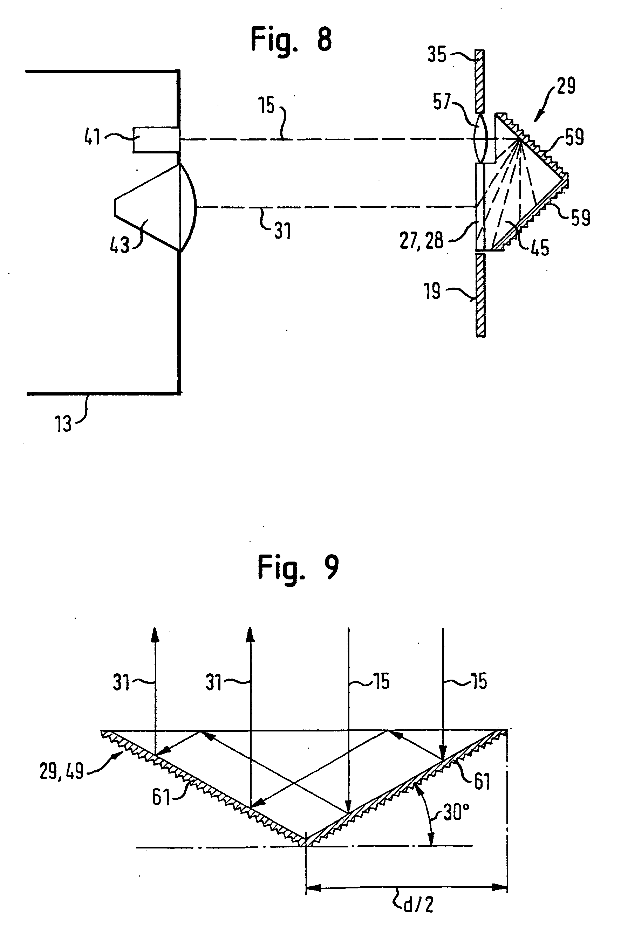

Die Fig. 7 und 8 zeigen am Beispiel einer biaxialen Anordnung eine Möglichkeit, die von der Sendeeinrichtung 41 ausgesandte Strahlung 15 einzufangen und räumlich versetzt zurück auf die Empfangseinrichtung 43 zu lenken. Die ausgesandte Strahlung 15 wird fahrzeugseitig mittels einer beispielsweise beidseitig konvexen Linse 57 im betrachteten Raumwinkelbereich 54 gesammelt und gebündelt, wobei der auf diese Weise erzeugte Lichtfleck auf eine als Streukörper ausgebildete optische Einrichtung 29 gelenkt wird, die Streuflächen 59 aufweist und die Strahlung diffus aufstreut. Bevorzugt handelt es sich bei der optischen Einrichtung 29 um eine Kombination aus einem Streukörper und einem oder mehreren lichtleitenden Elementen, die einstückig an einem bei vergleichsweise geringen Kosten im Spritzgussverfahren herstellbaren Kunststoffteil ausgebildet sind.

Auf eine separate Linse 57 kann auch verzichtet werden. Sofern eine Linsenfunktion überhaupt erforderlich ist, kann diese durch entsprechende Ausgestaltung des Streukörpers 29 auch von diesem übernommen werden.

Als Streuelement kann beispielsweise eine gegenüber der optischen Empfangsachse um z.B. 30° bis etwa 60° nach unten geneigte, an der Rückseite aufgeraute Streufläche 59 dienen, die gleichzeitig einen Teil eines lichtleitenden Elementes 45 bildet. Die aufgestreute Strahlung wird mittels des Lichtleiters derart aufgeteilt, dass an den linienförmig ausgebildeten Lichtleiterausgängen die zur Ausrichtungsbestimmung dienenden Prüflinien 28 mit einer hinreichend homogenen Intensitätsverteilung entstehen.

Die Lichtleiterausgänge des Körpers 29 können erhaben sein und durch entsprechende, in der Wand 35 ausgebildete Öffnungen gesteckt werden, wodurch gleichzeitig zum einen eine Blendenfunktion erzielt, d.h. sichergestellt wird, dass die Strahlung den Körper 29 nur in Form des gewünschten Linienmusters verlässt, und zum anderen eine definierte Positionierung des Körpers 29 relativ zur Wand 35 erreicht wird.

Eine bevorzugte Alternative besteht darin, die Wand 35 als mit das Linienmuster 27 bildenden Schlitzen versehene Blende auszubilden und den gewissermaßen als "Leuchtklotz" dienenden, mittels der Abtaststrahlen 15 als Ganzes zum Leuchten bringbaren Körper 29 ohne speziell ausgebildete, als Prüfflinien dienende Erhebungen einfach hinter der Wand 35 anzuordnen. Durch die korrekte Positionierung der Wand 35 ist dann gleichzeitig die korrekte Positionierung des Linienmusters 27 gewährleistet. Hinsichtlich der Positionierung des Leuchtkörpers 29 ist dann lediglich darauf zu achten, dass die Rückseite der Wand 35 über das gesamte Linienmuster 27 beleuchtet wird, und dass die einfallende Strahlung 15 derart eingefangen wird, dass der Körper 29 in ausreichender Weise zum Leuchten gebracht wird.

Ferner kann auch ohne separate Blende oder als Blende ausgebildete Wand gearbeitet werden, indem der Leuchtkörper 29 austrittsseitig unter Aussparung von das Linienmuster 27 bildenden Bereichen ablackiert, d.h. mit einer strahlungsundurchlässigen Beschichtung, versehen wird.

Aufgrund der in der Praxis vergleichsweise hohen verfügbaren Pulsstrahlungsleistung der Sendeeinrichtung 41, die beispielsweise 20 W betragen kann, können ggf. vorhandene, vergleichsweise hohe Dämpfungswerte in der optischen Einrichtung 29 toleriert werden.

Der in Fig. 7 dargestellte Teilbereich 54 ist ein Winkelbereich innerhalb des Prüfbereiches 53 (vgl. Fig. 2), in welchem die vom Scanner 13 ausgesandten Abtaststrahlen 15 auf die optische Einrichtung 29 treffen. Der Teilbereich 54 ist so groß gewählt, dass der von dem Linienmuster 27 gebildete Abtastbereich vollständig beleuchtet ist.

Die Fig. 9, 10 und 11 zeigen eine weitere erfindungsgemäße Möglichkeit zur Erzeugung eines Strahlung emittierenden Linienmusters 27, bei der im Strahlengang als optische Einrichtung 29 ein zweiseitig verspiegeltes Umlenkprisma 49 angeordnet ist. Die verspiegelten Flächen 61 des Prismas 49 schließen mit der Prismagrundseite jeweils einen Winkel von 30° ein. Wie Fig. 9 zeigt, werden senkrecht einfallende Abtaststrahlen 15 um einen konstanten Wert d/2 parallel versetzt und als mittels der Empfangseinrichtung des Scanners 13 nachweisbare Empfangsstrahlen 31 reflektiert.

Diese Eigenschaft des Prismas 49 kann erfindungsgemäß dazu genutzt werden, die ausgesandten Abtaststrahlen 15 des Scanners 13 auf dessen Empfangseinrichtung abzubilden.

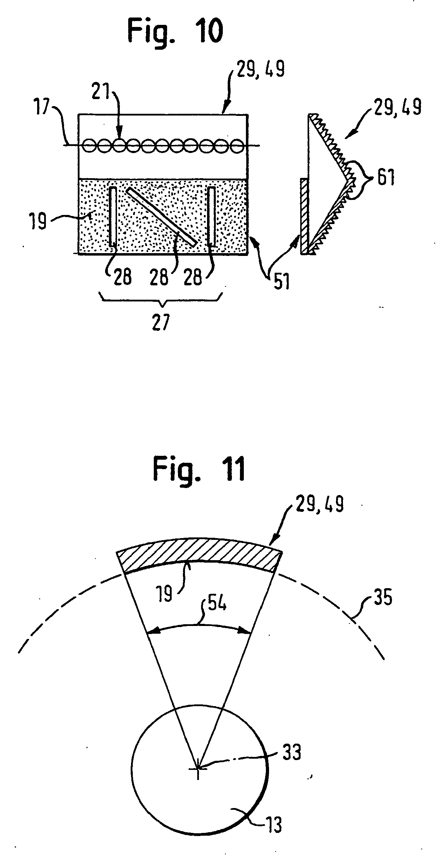

Fig. 10 zeigt, dass die die Abtastebene 17 bildenden Abtaststrahlen 15 über einen Eintrittsbereich in das Prisma 49 eintreten und nach Reflexion im Prisma 49 auf eine dessen Austrittsbereich vorgelagerte Blende 51 treffen, in der jeweils eine Prüflinie 28 und gemeinsam das Linienmuster 27 bildende Schlitze ausgebildet sind. Alternativ kann die Blende 51 auch eintrittsseitig, d.h. im Strahlengang vor dem Prisma 49, angeordnet sein. Die Empfangseinrichtung des Scanners 13 kann nur dann Strahlung nachweisen, wenn der jeweilige Abtaststrahl 15 nach Reflexion im Prisma 49 auf einen der Schlitze trifft, d.h. wenn die entsprechende Prüflinie 28 Strahlung emittiert. Hinsichtlich der lageabhängigen Codierung ergeben sich die gleichen Zusammenhänge, wie sie vorstehend anhand der anderen Ausführungsformen der Erfindung erläutert wurden.

Nachdem mittels des Prismas 49 lediglich senkrecht einfallende Abtaststrahlen 15 um den konstanten Betrag d/2 parallel versetzt und gleichzeitig die Einfallswinkel und Ausfallswinkel beibehalten werden, ist bei einer räumlich ausgedehnten Anordnung das Prisma 49 derart gekrümmt, dass es auf einem Kreisbogen mit einem auf der Mittelachse 33 des Spiegelrades des Scanners 13 liegenden Mittelpunkt liegt, wie es in Fig. 11 angedeutet ist.

Entsprechend Fig. 7 ist der in Fig. 11 dargestellte Teilbereich 54 ein Winkelbereich innerhalb des Prüfbereiches 53 (vgl. Fig. 2), in welchem die vom Scanner 13 ausgesandten Abtaststrahlen 15 auf die optische Einrichtung 29 treffen.

Gegebenenfalls kann jeweils im Strahlengang ein zusätzlicher Dämpfungsfilter vorgesehen sein, wobei dies grundsätzlich für alle Ausführungsformen der Erfindung gilt.

Bei der vorstehend erläuterten Verwendung von Linienmustern 27 zur Ausrichtungsbestimmung ist zu beachten, dass bei einem biaxialen System in einem Scanner 13, wie es beispielsweise in Fig. 8 dargestellt ist, sich der Sendespot während der Abtastbewegung des Scanners gewissermaßen um den Empfangsspot herum drehen kann. Bei der bevorzugten Zweifach-Anordnung von zwei in einem Winkelabstand von beispielsweise 90° angeordneten Linienmustern 27 jeweils mit zugehörigen optischen Einrichtungen 29 ist folglich dafür zu sorgen, dass die als Lichtleitersysteme dienenden optischen Einrichtungen entsprechend gedreht angeordnet werden, da anderenfalls auch bei korrekter Ausrichtung des Scanners 13 kein Empfangslicht nachgewiesen werden könnte.

Von Vorteil bei den beschriebenen Ausführungsformen der Erfindung ist, dass im Nahbereich des Scanners 13 die Abtastlichtflecke 21 noch nicht scharf abgebildet, sondern vergrößert werden, was sich besonders günstig für die Realisierung der Erfindung auswirkt.

### Bezugszeichenliste

- 11: Gegenstand, Fahrzeug
- 13: Sensor, Laserscanner
- 15: Abtaststrahl
- 17: Abtastebene
- 19: Prüffläche
- 21, 21': Abtaststrahlfleck, Sendespot
- 22, 22': Empfangsspot
- 23: optoelektronische Nachweiseinrichtung, Kamera
- 25: Abtastlinie
- 27: Linienmuster
- 28: Prüflinie
- 29: optische Einrichtung
- 31: Empfangsstrahlen
- 33: Sensorachse, Mittelachse des Sensordrehspiegels
- 35: Begrenzungswand
- 37: Abdeckung
- 39: CCD-Matrix
- 41: Sendeeinrichtung
- 43: Empfangseinrichtung
- 45: strahlungsleitendes Element
- 49: Umlenkprisma
- 51: Blende
- 53: Prüfbereich
- 54: Teilbereich
- 55: Erfassungsbereich
- 57: Linse
- 59: Streufläche
- 61: Spiegelfläche

- F: Fahrtrichtung

## Patentansprüche

1. Verfahren zum Bestimmen der Ausrichtung eines an einem Gegenstand (11), insbesondere einem Fahrzeug, angebrachten optoelektronischen Sensors (13), insbesondere eines Laserscanners, der zur Erfassung der Umgebung des Gegenstands (11) mit zumindest einem wiederholend ausgesandten Abtaststrahl (15) in wenigstens einer Abtastebene (17) einen vorgegebenen Winkelbereich von bevorzugt 360° überstreicht, **dadurch gekennzeichnet, dass** zur Bestimmung der Sensorausrichtung die Lage der Abtastebene (17) im Raum ermittelt wird, indem auf zumindest einer gegenstandsfesten, im Sichtbereich des Sensors (13) liegenden Prüffläche (19) die Lage wenigstens eines Abtaststrahlffecks (21) bezogen auf eine vorgegebene Sollausrichtung der Abtastebene (17) relativ zu der Prüffläche (19) bestimmt wird.

2. Verfahren nach Anspruch 1,
**dadurch gekennzeichnet,**
**dass** auf wenigstens zwei in einem vorgegebenen Winkelabstand von vorzugsweise 90° angeordneten Prüfflächen (19) jeweils die Lage wenigstens eines Abtaststrahlflecks (21) bestimmt wird.

3. Verfahren nach Anspruch 1 oder 2,
**dadurch gekennzeichnet,**
**dass** als Prüffläche (19) eine ortsauflösende, bevorzugt im Vergleich zum Abtaststrahlfleck (21) große optoelektronische Nachweiseinrichtung (23) verwendet wird, mit der vorzugsweise die Lage genau eines Abtaststrahlflecks (21) auf der Prüffläche (19) bestimmt wird.

4. Verfahren nach Anspruch 3,
**dadurch gekennzeichnet,**
**dass** mittels der ortsauflösenden optoelektronischen Nachweiseinrichtung (23) zusätzlich zur Lage des Abtaststrahlflecks (21) aus dessen Intensität die Strahlungsleistung des Sensors (13) bestimmt wird.

5. Verfahren nach einem der vorhergehenden Ansprüche,
**dadurch gekennzeichnet,**
**dass** die Orientierung einer von mehreren Abtaststrahlflecken (21) gebildeten Abtastlinie (25) auf der Prüffläche (19) bezogen auf die Sollausrichtung bestimmt wird.

6. Verfahren nach Anspruch 5,
**dadurch gekennzeichnet,**
**dass** die Orientierung der Abtastlinie (25) mittels eines auf der Prüffläche (19) vorgesehenen Linienmusters (27) bestimmt wird, das zumindest zeitweise mittels des Sensors (13) nachweisbare Strahlung emittiert.

7. Verfahren nach Anspruch 6,
**dadurch gekennzeichnet,**
**dass** das Linienmuster (27) mehrere Prüflinien (28) umfasst, von denen wenigstens zwei Prüflinien (28) nicht parallel zueinander oder die parallel zueinander mit paarweise unterschiedlichen Abständen verlaufen, wobei vorzugsweise die Prüflinien (28) N-, M-, V- oder W-förmig angeordnet sind.

8. Verfahren nach Anspruch 6 oder 7,
**dadurch gekennzeichnet,**
**dass** eine Strahlungsquelle für das Linienmuster (27) mit der Abtastbewegung des Sensors (13) synchronisiert wird, bevorzugt derart, dass vom Linienmuster (27) Strahlung nur unter für die Sollausrichtung erwarteten Winkelrichtungen und/oder zu für die Sollausrichtung erwarteten Zeitpunkten emittiert wird.

9. Verfahren nach einem der Ansprüche 6 bis 8,
**dadurch gekennzeichnet,**
**dass** als Strahlungsquelle für das Linienmuster (27) eine sensorfremde Strahlungsquelle verwendet wird, wobei vorzugsweise zumindest in dem der Prüffläche (19) entsprechenden Winkelbereich des Sensors (13) die Aussendung von Abtaststrahlen (15) durch den Sensor (13) unterbleibt.

10. Verfahren nach einem der Ansprüche 6 bis 8,
**dadurch gekennzeichnet,**
**dass** als Strahlungsquelle für das Linienmuster (27) eine zur Aussendung der Abtaststrahlen (15) dienende Sendeeinrichtung (41) des Sensors (13) verwendet wird.

11. Verfahren nach Anspruch 10,
**dadurch gekennzeichnet,**
**dass** das Linienmuster (27) mittels einer gegenstandsfesten optischen Einrichtung (29) aus den Abtaststrahlen (15) erzeugt wird.

12. Verfahren nach Anspruch 10 oder 11,
**dadurch gekennzeichnet,**
**dass** die vom Sensor (13) ausgesandten Abtaststrahlen (15) mittels einer gegenstandsfesten optischen Einrichtung (29) derart umgelenkt werden, dass die ausgesandten Abtaststrahlen (15) und die vom Linienmuster (27) emittierten Empfangsstrahlen (31) gegeneinander versetzt werden.

13. Verfahren nach einem der Ansprüche 6 bis 12,
**dadurch gekennzeichnet,**
**dass** die Abtaststrahlen direkt von das Linienmuster bildenden Reflektoren reflektiert werden.

14. Verfahren nach einem der vorhergehenden Ansprüche,
**dadurch gekennzeichnet,**
**dass** eine Vorrichtung nach einem der Ansprüche 16 bis 35 verwendet wird.

15. Verfahren zum Kompensieren einer Fehlausrichtung eines an einem Gegenstand (11), insbesondere einem Fahrzeug, angebrachten optoelektronischen Sensors (13), insbesondere eines Laserscanners, der zur Erfassung der Umgebung des Gegenstands (11) mit zumindest einem wiederholend ausgesandten Abtaststrahl (15) in wenigstens eine Abtastebene (17) einen vorgegebenen Winkelbereich von bevorzugt 360° überstreicht, wobei die Momentanausrichtung des Sensors (13) mittels eines Verfahrens nach einem der Ansprüche 1 bis 14 bestimmt und mit einer vorgegebenen Sollausrichtung verglichen wird, und wobei im Fall einer Abweichung der Momentanausrichtung von der Sollausrichtung diese Fehlausrichtung des Sensors (13) durch Verstellen des Sensors (13) relativ zum Gegenstand (11) bevorzugt automatisch kompensiert wird.

16. Vorrichtung zum Bestimmen der Ausrichtung eines an einen Gegenstand (11), insbesondere einem Fahrzeug, angebrachten optoelektronischen Sensors (13), insbesondere eines Laserscanners, der zur Erfassung der Umgebung des Gegenstands (11) mit zumindest einem wiederholend ausgesandten Abtaststrahl (15) in wenigstens eine Abtastebene (17) einen vorgegebenen Winkelbereich von bevorzugt 360° überstreicht, **dadurch gekennzeichnet, dass** im Sichtbereich des Sensors (13) zumindest eine gegenstandsfeste Prüffläche (19) angeordnet ist, auf der die Lage wenigstens eines Abtaststrahlflecks (21) bezogen auf eine vorgegebene Sollausrichtung der Abtastebene (17) relativ zu der Prüffläche (19) bestimmbar ist.

17. Vorrichtung nach Anspruch 16,
**dadurch gekennzeichnet,**
**dass** als optoelektronischer Sensor (13) ein Entfernungen und Winkel messender Laserscanner vorgesehen ist, der in der Abtastebene (17) zu jedem Entfernungswert einen auf einen Referenzwinkel bezogenen Winkelwert liefert.

18. Vorrichtung nach Anspruch 16 oder 17,
**dadurch gekennzeichnet,**
**dass** die Prüffläche (19) an einer Begrenzungswand (35) vorgesehen ist, die im am Gegenstand (11) montierten Zustand in einem nicht zur Umgebungserfassung vorgesehenen Teil des Sichtbereiches des Sensors (13) gelegen ist und zusammen mit einer strahlungsdurchlässigen Abdeckung (37) einen Ein- oder Anbauraum des Sensors (13) am Gegenstand (11) zumindest bereichsweise begrenzt.

19. Vorrichtung nach einem der Ansprüche 16 bis 18,
**dadurch gekennzeichnet,**
**dass** wenigstens zwei in einem vorgegebenen Winkelabstand von vorzugsweise 90° angeordnete Prüfflächen (19) vorgesehen sind.

20. Vorrichtung nach einem der Ansprüche 16 bis 19,
**dadurch gekennzeichnet,**
**dass** die Prüffläche (19) in Form einer ortsauflösenden, bevorzugt im Vergleich zum Abtaststrahlfleck (21) großen optoelektronischen Nachweiseinrichtung (23) vorgesehen ist, insbesondere in Form einer Kamera.

21. Vorrichtung nach einem der Ansprüche 16 bis 20,
**dadurch gekennzeichnet,**
**dass** die Prüffläche (19) von einem optoelektronischen Sensor-Array (39), insbesondere einer CCD-Matrix, einem CMOS-Array, einem APD-Array oder einem PIN-Dioden-Array, gebildet ist.

22. Vorrichtung nach einem der Ansprüche 16 bis 20,
**dadurch gekennzeichnet,**
**dass** die Prüffläche von einem Array aus strahlungsleitenden Elementen, insbesondere Glasfasern, gebildet ist.

23. Vorrichtung nach einem der Ansprüche 16 bis 19,
**dadurch gekennzeichnet,**
**dass** die Prüffläche (19) ein Linienmuster (27) aufweist, das zur zumindest zeitweisen Emission von mittels des Sensors (13) nachweisbarer Strahlung ausgebildet ist.

24. Vorrichtung nach Anspruch 23,
**dadurch gekennzeichnet,**
**dass** die das Linienmuster (27) aufweisende Prüffläche (19) eine Ebene ist, wobei das Linienmuster (27) eine Projektion eines Linienmusters auf einer Kugelfläche mit einem auf einer Sensorachse (33) liegenden Mittelpunkt ist.

25. Vorrichtung nach Anspruch 23,
**dadurch gekennzeichnet,**
**dass** die das Linienmuster aufweisende Prüffläche ein Teil einer Kugelfläche mit einem auf einer Sensorachse liegenden Mittelpunkt ist.

26. Vorrichtung nach einem der Ansprüche 23 bis 25,
**dadurch gekennzeichnet,**
**dass** das Linienmuster (27) mehrere Prüflinien (28) umfasst, von denen wenigstens zwei Prüflinien (28) nicht parallel zueinander oder die parallel zueinander mit paarweise unterschiedlichen Abständen verlaufen, wobei vorzugsweise die Prüflinien (28) N-, M-, V- oder W-förmig angeordnet sind.

27. Vorrichtung nach einem der Ansprüche 23 bis 26,
**dadurch gekennzeichnet,**
**dass** die Prüflinien (28) des Linienmusters (27) jeweils von selbstleuchtenden Strahlungsquellen gebildet sind, insbesondere von LEDs, Lichtleitern oder Glasfasern.

28. Vorrichtung nach einem der Ansprüche 23 bis 27,
**dadurch gekennzeichnet,**
**dass** eine Steuereinrichtung vorgesehen ist, mit der das Linienmuster (27) bildende oder erzeugende Strahlungsquellen in Abhängigkeit von der Abtastbewegung des Sensors (13) aktivierbar sind, bevorzugt derart, dass vom Linienmuster (27) Strahlung nur unter für die Sollausrichtung erwarteten Winkelrichtungen und/oder zu für die Sollausrichtung erwarteten Zeitpunkten emittiert wird.

29. Vorrichtung nach einem der Ansprüche 23 bis 28,
**dadurch gekennzeichnet,**
**dass** im Bereich der Prüffläche (19) eine optische Einrichtung (29) angeordnet ist, mit der das Linienmuster (27) aus den Abtaststrahlen (15) erzeugbar ist.

30. Vorrichtung nach einem der Ansprüche 16 bis 29,
**dadurch gekennzeichnet,**
**dass** der Sensor (13) derart ausgebildet ist, dass für Entfernungen in einem die Prüffläche (19) umfassenden Nahbereich keine direkte Reflexion der Abtaststrahlen (15) auf eine Empfangseinrichtung (43) des Sensors (13) erfolgt.

31. Vorrichtung nach Anspruch 29 oder 30,
**dadurch gekennzeichnet,**
**dass** mit der optischen Einrichtung (29) ein Versatz zwischen den ausgesandten Abtaststrahlen (15) und den vom Linienmuster (27) emittierten Empfangsstrahlen (31) erzeugbar ist.

32. Vorrichtung nach Anspruch 31,
**dadurch gekennzeichnet,**
**dass** die optische Einrichtung (29) zumindest ein strahlungsleitendes Element (45), das austrittsseitig zumindest eine Prüflinie (28) des Linienmusters (27) bildet, und wenigstens ein Streuelement (59) umfasst, über das die vom Sensor (13) ausgesandten Abtaststrahlen (15) in das strahlungsleitende Element (45) einspeisbar sind.

33. Vorrichtung nach Anspruch 32,
**dadurch gekennzeichnet,**
**dass** das strahlungsleitende Element (45) und das Streuelement (47) an einem einstückigen, insbesondere aus Kunststoff hergestellten Körper (29) ausgebildet sind.

34. Vorrichtung nach einem der Ansprüche 29 bis 33,
**dadurch gekennzeichnet,**
**dass** die optische Einrichtung (29) ein strahlungsdurchlässiger, insbesondere einstückiger Körper ist, der mittels der vom Sensor (13) ausgesandten Abtaststrahlen (15) oder mittels sensorfremder Strahlungsquellen zumindest im Wesentlichen als Ganzes zur Emission von Strahlung bringbar ist und als Strahlungsquelle für das Linienmuster (27) dient, wobei im Strahlengang vor oder hinter der optischen Einrichtung (29) wenigstens eine Blende oder Maske (51) mit zumindest eine Prüflinie (28) des Linienmusters (27) bildenden strahlungsdurchlässigen Bereichen vorgesehen ist.

35. Vorrichtung nach einem der Ansprüche 29 bis 34,
**dadurch gekennzeichnet,**
**dass** die optische Einrichtung (29) wenigstens ein Umlenkprisma (49), mit dem einfallende Abtaststrahlen (15) parallel versetzt reflektierbar sind, und zumindest eine im Strahlengang vor oder hinter dem Umlenkprisma (49) vorgesehene Blende oder Maske (51) mit zumindest eine Prüflinie (28) des Linienmusters (27) bildenden strahlungsdurchlässigen Bereichen umfasst.

36. Vorrichtung nach einem der Ansprüche 23 bis 35,
**dadurch gekennzeichnet,**
**dass** die Prüflinien des Linienmusters von Reflektoren gebildet sind, die vorzugsweise in Form von Materialstreifen mit einer im Vergleich zur Umgebung hohen Reflektivität vorgesehen sind.

37. Fahrzeug (11) mit wenigstens einem fahrzeugfesten optoelektronischen Sensor (13), insbesondere einem Laserscanner, zur Erfassung der Fahrzeugumgebung und mit einer dem Sensor (13) zugeordneten Vorrichtung zum Bestimmen der Sensorausrichtung nach einem der Ansprüche 16 bis 36.

## Claims

1. A method of determining the alignment of an optoelectronic sensor (13), in particular of a laser scanner, which is attached to an object (11), in particular to a vehicle, and sweeps at least one repeatedly transmitted scanning beam (15) over a predetermined angular region of preferably 360° in at least one scanning plane (17) for the detection of the surroundings of the object (11), **characterised in that** the position of the scanning plane (17) in space is determined for the determination of the sensor alignment, **in that** the position of at least one scanning beam spot (21) on at least one test surface (19), fixed with respect to the object, and lying in the visual range of the sensor (13), is determined with respect to a predetermined desired alignment of the scanning plane (17) relative to the test surface (19).

2. A method in accordance with claim 1, **characterised in that** the respective position of at least one scanning beam spot (21) is determined on at least two test surfaces (19) arranged at a predetermined angular spacing of preferably 90°.

3. A method in accordance with claim 1 or claim 2, **characterised in that** a spatially resolving optoelectronic detection device (23), preferably large in comparison with the scanning beam spot (21), is used as the test surface (19) and the position of precisely one scanning beam spot (21) is preferably determined on the test surface (19) with it.

4. A method in accordance with claim 3, **characterised in that**, in addition to the position of the scanning beam spot (21), the radiation power of the sensor (13) is also determined from its intensity by means of the spatially resolving optoelectronic detection device (23).

5. A method in accordance with any one of the preceding claims, **characterised in that** the orientation of a scanning line (25) formed by a plurality of scanning beam spots (21) is determined on the test surface (19) with respect to the desired alignment.

6. A method in accordance with claim 5, **characterised in that** the orientation of the scanning line (25) is determined by means of a line pattern (27) which is provided on the test surface (19) and which emits radiation detectable at least at times by means of the sensor (13).

7. A method in accordance with claim 6, **characterised in that** the line pattern (27) comprises a plurality of test lines (28) of which at least two test lines (28) do not extend parallel to one another or which extend parallel to one another with pairwise different intervals, with the test lines (28) preferably being arranged in N shape, M shape, V shape or W shape.

8. A method in accordance with claim 6 or claim 7, **characterised in that** a radiation source for the line pattern (27) is synchronized with the scanning movement of the sensor (13), preferably such that radiation is only emitted by the line pattern (27) at angular directions expected for the desired alignment and/or at points in time expected for the desired alignment.

9. A method in accordance with any one of the claims 6 to 8, **characterised in that** a radiation source external to the sensor is used as the radiation source for the line pattern (27), with the transmission of scanning beams (15) by the sensor (13) preferably being suppressed at least in the angular region of the sensor (13) corresponding to the test surface (19).

10. A method in accordance with any one of the claims 6 to 8, **characterised in that** a transmitter device (41) of the sensor (13) serving for the transmission of the scanning beams (15) is used as the radiation source for the line pattern (27).

11. A method in accordance with claim 10, **characterised in that** the line pattern (27) is generated from the scanning beams (15) by means of an optical device (29) fixed with respect to the object.

12. A method in accordance with claim 10 or claim 11, **characterised in that** the scanning beams (15) transmitted by the sensor (13) are deflected by means of an optical device (29) fixed with respect to the object such that the transmitted scanning beams (15) and the received beams (31) emitted by the line pattern (27) are offset with respect to one another.

13. A method in accordance with any one of the claims 6 to 12, **characterised in that** the scanning beams are reflected directly by te reflectors forming the line pattern.

14. A method in accordance with any one of the preceding claims, **characterised in that** an apparatus in accordance with any one of the claims 16 to 35 is used.

15. A method of compensating an incorrect alignment of an optoelectronic sensor (13), in particular of a laser scanner, which is attached to an object (11), in particular to a vehicle, and sweeps at least one repeatedly transmitted scanning beam (15) over a predetermined angular region of preferably 360° in at least one scanning plane (17) for the detection of the surroundings of the object (11), with the instantaneous alignment of the sensor (13) being determined by means of a method in accordance with any one of the claims 1 to 14 and being compared to a predetermined desired alignment, and with - in the event of a deviation of the instantaneous alignment from the desired alignment of the sensor (13) - this incorrect alignment being compensated, preferably automatically, by adjusting the sensor (13) relative to the object (11).

16. An apparatus for the determination of the alignment of an optoelectronic sensor (13), in particular of a laser scanner, which is attached to an object (11), in particular to a vehicle, and sweeps at least one repeatedly transmitted scanning beam (15) over a predetermined angular region of preferably 360° in at least one scanning plane (17) for the detection of the surroundings of the object (11), **characterised in that** at least one test surface (19) fixed with respect to the object is arranged in the visual range of the sensor (13), on which test surface the position of at least one scanning beam spot (21) can be determined with respect to a predetermined desired alignment of the scanning plane (17) relative to the test surface (19).

17. An apparatus in accordance with claim 16, **characterised in that** a laser scanner is provided as the optoelectronic sensor (13) which measures distances and angles and which delivers an angular value related to a reference angle for each distance value in the scanning plane (17).

18. An apparatus in accordance with claim 16 or 17, **characterised in that** the test surface (19) is provided at a boundary wall (35) which is disposed in the state mounted to the object (11) in a part of the visual range of the sensor (13) not provided for the detection of the surroundings and which bounds an installation space or attachment space of the sensor (13) at the object (11) at least regionally together with a cover (37) transmitting radiation.

19. An apparatus in accordance with any one of the claims 16 to 18, **characterised in that** at least two test surfaces (19) are provided which are arranged at a predetermined angular interval of preferably 90°.

20. An apparatus in accordance with any one of the claims 16 to 19, **characterised in that** the test surface (19) is provided in the form of a spatially resolving optoelectronic detection device (23), preferably large in comparison to the scanning beam spot (21), in particular in the form of a camera.

21. An apparatus in accordance with any one of the claims 16 to 20, **characterised in that** the test surface (19) is formed by an optoelectronic sensor array (39), in particular by a CCD matrix, a CMOS array, an APD array or a PIN diode array.

22. An apparatus in accordance with any one of the claims 16 to 20, **characterised in that** the test surface is formed by an array of radiation-conducting elements, in particular glass fibbers.

23. An apparatus in accordance with any one of the claims 16 to 19, **characterised in that** the test surface (19) has a line pattern (27) which is made for the emission at least at times of radiation detectable by means of the sensor (13).

24. An apparatus in accordance with claim 23, **characterised in that** the test surface (19) having the line pattern (27) is a plane, with the line pattern (27) being a projection of a line pattern on a spherical surface with a centre lying on a sensor axis (33).

25. An apparatus in accordance with claim 23, **characterised in that** the test surface having the line pattern is a part of a spherical surface with a centre lying on a sensor axis.

26. An apparatus in accordance with any one of the claims 23 to 25, **characterised in that** the line pattern (27) comprises a plurality of test lines (28) of which at least two test lines (28) do not extend parallel to one another or which extend parallel to one another with pairwise different intervals, with the test lines (28) preferably being arranged in N shape, M shape, V shape or W shape.

27. An apparatus in accordance with any one of the claims 23 to 26, **characterised in that** the test lines (28) of the line pattern (27) are each formed by self-luminous radiation sources, in particular by LEDs, light guides or glass fibers.

28. An apparatus in accordance with any one of the claims 23 to 27, **characterised in that** a control device is provided with which radiation sources forming or generating the light pattern (27) can be activated in dependence on the scanning movement of the sensor (13), preferably such that radiation is only emitted by the line pattern (27) at angular directions expected for the desired alignment and/or at points in tim expected for the desired alignment.

29. An apparatus in accordance with any one of the claims 23 to 28, **characterised in that** an optical device (29) is arranged in the region of the test surface (19) with which the line pattern (27) can be generated from the scanning beams (15).

30. An apparatus in accordance with any one of the claims 16 to 29, **characterised in that** the sensor (13) is made such that no direct reflection of the scanning beams (15) onto a receiver device (43) of the sensor (13) takes place for distances in a near region encompassing the test surface (19).

31. An apparatus in accordance with claim 29 or 30, **characterised in that** an offset between the transmitted scanning beams (15) and the received beams (31) emitted by the line pattern (27) can be generated by the optical device (29).

32. An apparatus in accordance with claim 31, **characterised in that** the optical device (29) includes at least one beam conducting element (45) which forms at least one test line (28) of the line pattern (27) at the exit side and at least one scattering element (59) via which the scanning beams (15) transmitted by the sensor (13) can be fed into the beam conducting element (45).

33. An apparatus in accordance with claim 32, **characterised in that** the beam conducting element (45) and the scattering element (47) are formed at an integral body (29), in particular a body made of plastic.

34. An apparatus in accordance with any one of the claims 29 to 33, **characterised in that** the optical device (29) is a radiation transmitting, in particular integral, body which can be bought to emit radiation at least substantially as a whole by means of the scanning beams (15) transmitted by the sensor (13) or by means of radiation sources external to the sensor and serves as a radiation source for the line pattern (27), with at least one diaphragm or mask (51) with regions transmitting radiation forming at least one test line (28) of the line pattern (27) being provided in the beam path before or after the optical device (29).

35. An apparatus in accordance with any one of the claims 29 to 34, **characterised in that** the optical device (29) includes at least one deviation prism (49), with which incident scanning beams (15) can be reflected in a parallel offset manner, and at least one diaphragm or mask (51) with regions transmitting radiation forming at least one test line (28) of the line pattern (27) provided in the beam path before or after the deviation prism (49).

36. An apparatus in accordance with any one of the claims 23 to 35, **characterised in that** the test lines of the line pattern are formed by reflectors which are preferably provided in the form of material strips having a reflectivity high in comparison with the surroundings.

37. A vehicle (11) having at least one optoelectronic sensor (13), in particular a laser scanner, fixed with respect to the vehicle, for the detection of the vehicle surroundings and having an apparatus associated with the sensor (13) for the determination of the sensor alignment in accordance with any one of the claims 16 to 36.

## Revendications

1. Procédé de détermination de l'orientation d'un détecteur optoélectronique (13), en particulier d'un scanneur à laser, agencé sur un objet (11), en particulier sur un véhicule, qui, en vue de détecter l'environnement de l'objet (11), balaie une zone angulaire prédéterminée de préférence de 360° par au moins un rayon de balayage (15) émis à répétition dans au moins un plan de balayage (17), **caractérisé en ce que** pour déterminer l'orientation du détecteur, on détecte la position du plan de balayage (17) dans l'espace en déterminant, sur au moins une surface de contrôle (19) solidaire de l'objet et située dans la zone de vision du détecteur (13), la position d'au moins une tache de rayon de balayage (21) par rapport à une orientation de consigne prédéterminée du plan de balayage (17) par rapport à la surface de contrôle (19).

2. Procédé selon la revendication 1,
**caractérisé en ce que**
sur au moins deux surfaces de contrôle (19) agencées à une distance angulaire prédéterminée de préférence de 90°, on détermine la position d'au moins une tache de rayon de balayage (21).

3. Procédé selon la revendication 1 ou 2,
**caractérisé en ce que**
à titre de surface de contrôle (19), on utilise un dispositif de décèlement optoélectronique (23) à résolution locale et de grande taille par comparaison à la tache de rayon de balayage (21), par lequel on détermine de préférence la position de précisément une tache de rayon de balayage (21) sur la surface de contrôle (19).

4. Procédé selon la revendication 3,
**caractérisé en ce que**
au moyen du dispositif de décèlement optoélectronique (23) à résolution locale, on détermine en supplément à la position de la tache de rayon de balayage (21), la puissance de rayonnement du détecteur (13) à partir de l'intensité de ladite tache.

5. Procédé selon l'une des revendications précédentes,
**caractérisé en ce que**
l'on détermine l'orientation d'une ligne de balayage (25), formée par plusieurs taches de rayon de balayage (21), sur la surface de contrôle (19) par rapport à l'orientation de consigne.

6. Procédé selon la revendication 5,
**caractérisé en ce que**
l'on détermine l'orientation de la ligne de balayage (25) au moyen d'un motif de lignes (27) prévu sur la surface de contrôle (19), motif qui émet un rayonnement susceptible d'être décelé au moins temporairement au moyen du détecteur (13).

7. Procédé selon la revendication 6,
**caractérisé en ce que**
le motif de lignes (27) comprend plusieurs lignes de contrôle (28) dont au moins deux lignes de contrôle (28) ne s'étendent pas parallèlement l'une à l'autre ou s'étendent parallèlement l'une à l'autre avec des distances qui diffèrent par paire, les lignes de contrôle (28) étant agencées de préférence en forme de N, M, V ou W.

8. Procédé selon la revendication 6 ou 7,
**caractérisé en ce que**
une source de rayonnement pour le motif de lignes (27) est synchronisée avec le mouvement de balayage du détecteur (13), de préférence de telle sorte qu'un rayonnement est émis par le motif de lignes (27) uniquement dans les directions angulaires attendues pour l'orientation de consigne et/ou à des instants attendus pour l'orientation de consigne.

9. Procédé selon l'une des revendications 6 à 8,
**caractérisé en ce que**
l'on utilise à titre de source de rayonnement pour le motif de lignes (27) une source de rayonnement à l'extérieur du détecteur, et de préférence au moins dans la zone angulaire du détecteur (13) correspondante à la surface de contrôle (19) il n'y a pas d'émission de rayons de balayage (15) par le détecteur (13).

10. Procédé selon l'une des revendications 6 à 8,
**caractérisé en ce que**
l'on utilise à titre de source de rayonnement pour le motif de lignes (27) un dispositif d'émission (41) du détecteur (13), qui sert à l'émission des rayons de balayage (15).

11. Procédé selon la revendication 10,
**caractérisé en ce que**
l'on génère le motif de lignes (27) au moyen d'un dispositif optique (29) solidaire de l'objet à partir des rayons de balayage (15).

12. Procédé selon la revendication 10 ou 11,
**caractérisé en ce que**
les rayons de balayage (15) émis par le détecteur (13) sont défléchis au moyen d'un dispositif optique (29) solidaire de l'objet, de telle sorte que les rayons de balayage émis (15) et les rayons de réception (31) émis par le motif de lignes (27) sont décalés les uns par rapport aux autres.

13. Procédé selon l'une des revendications 6 à 12,
**caractérisé en ce que**
les rayons de balayage sont réfléchis directement par des réflecteurs formant le motif de lignes.

14. Procédé selon l'une des revendications précédentes,
**caractérisé en ce que**
l'on utilise un dispositif selon l'une des revendications 16 à 35.

15. Procédé pour compenser une erreur d'orientation d'un détecteur optoélectronique (13), en particulier d'un scanneur à laser, agencé sur un objet (11), en particulier sur un véhicule, qui, en vue de détecter l'environnement de l'objet (11), balaie une zone angulaire prédéterminée de préférence de 360° par au moins un rayon de balayage (15) émis à répétition dans au moins un plan de balayage (17), l'orientation momentanée du détecteur (13) étant déterminée au moyen d'un procédé selon l'une des revendications 1 à 14 et étant comparée à une orientation de consigne prédéterminée, et dans le cas d'un écart de l'orientation momentanée par rapport à l'orientation de consigne, cette erreur d'orientation du détecteur (13) est compensée de préférence automatiquement par déplacement du détecteur (13) par rapport à l'objet (11).

16. Dispositif pour déterminer l'orientation d'un détecteur optoélectronique (13), en particulier d'un scanneur à laser, agencé sur un objet (11), en particulier sur un véhicule, qui, en vue de détecter l'environnement de l'objet (11), balaie une zone angulaire prédéterminée de préférence de 360° par au moins un rayon de balayage (15) émis à répétition dans au moins un plan de balayage (17),
**caractérisé en ce que**
au moins une surface de contrôle (19) solidaire de l'objet est agencée dans la zone de vision du détecteur (13), surface sur laquelle la position d'au moins une tache de rayon de balayage (21) par rapport à une orientation de consigne prédéterminée du plan de balayage (17) est susceptible d'être déterminée par rapport à la surface de contrôle (19).

17. Dispositif selon la revendication 16,
**caractérisé en ce que**
à titre de détecteur optoélectronique (13) est prévu un scanneur à laser qui mesure des distances et des angles et qui fournit pour chaque valeur de distance une valeur angulaire par rapport à un angle de référence dans le plan de balayage (17).

18. Dispositif selon la revendication 16 ou 17,
**caractérisé en ce que**
la surface de contrôle (19) est prévue sur une paroi de délimitation (35) qui, dans l'état monté sur l'objet (11), se situe dans une partie de la zone de vision du détecteur (13) qui n'est pas prévue pour la détection de l'environnement, et délimite conjointement avec un recouvrement (37) perméable au rayonnement au moins localement un espace d'intégration ou de montage du détecteur (13) sur l'objet (11).

19. Dispositif selon l'une des revendications 16 à 18,
**caractérisé en ce que**
il est prévu au moins deux surfaces de contrôle (19) agencées à une distance angulaire prédéterminée de préférence de 90°.

20. Dispositif selon l'une des revendications 16 à 19,
**caractérisé en ce que**
la surface de contrôle (19) est prévue sous la forme d'un dispositif de décèlement optoélectronique (23) à résolution locale et de préférence de grande taille par comparaison à la tache de rayon de balayage (21), en particulier sous la forme d'une caméra.

21. Dispositif selon l'une des revendications 16 à 20,
**caractérisé en ce que**
la surface de contrôle (19) est formée par un réseau de détecteurs optoélectronique (39), en particulier par une matrice CCD, un réseau CMOS, un réseau APD ou un réseau à diodes PIN.

22. Dispositif selon l'une des revendications 16 à 20,
**caractérisé en ce que**
la surface de contrôle est formée par un réseau d'éléments conducteurs de rayonnement, en particulier de fibres de verre.

23. Dispositif selon l'une des revendications 16 à 19,
**caractérisé en ce que**
la surface de contrôle (19) présente un motif de lignes (27) qui est réalisé pour l'émission au moins temporaire d'un rayonnement susceptible d'être décelé au moyen d'un détecteur (13).

24. Dispositif selon la revendication 23,
**caractérisé en ce que**
la surface de contrôle (19) présentant le motif de lignes (27) est un plan, le motif de lignes (27) étant une projection d'un motif de lignes sur une surface sphérique dont le centre est situé sur un axe de détecteur (33).

25. Dispositif selon la revendication 23,
**caractérisé en ce que**
la surface de contrôle présentant le motif de lignes fait partie d'une surface sphérique dont le centre est situé sur un axe de détecteur.

26. Dispositif selon l'une des revendications 23 à 25,
**caractérisé en ce que**
le motif de lignes (27) présente plusieurs lignes de contrôle (28) dont au moins deux lignes de contrôle ne s'étendent pas parallèlement l'une à l'autre ou s'étendent parallèlement l'une à l'autre avec des distances qui diffèrent par paire, les lignes de contrôle (28) étant agencées de préférence en forme de N, M, V ou W.

27. Dispositif selon l'une des revendications 23 à 26,
**caractérisé en ce que**
les lignes de contrôle (28) du motif de lignes (27) sont formées chacune par des sources de rayonnement auto-luminescentes, en particulier par des diodes électroluminescentes, des conducteurs de lumière ou des fibres de verre.

28. Dispositif selon l'une des revendications 23 à 27,
**caractérisé en ce que**
il est prévu un dispositif de commande par lequel des sources de rayonnement formant ou générant le motif de lignes (27) sont susceptibles d'être activées en fonction du mouvement de balayage du détecteur (13), de préférence de telle sorte qu'un rayonnement est émis par le motif de lignes (27) uniquement dans des directions angulaires attendues pour l'orientation de consigne et/ou uniquement à des instants attendus pour l'orientation de consigne.

29. Dispositif selon l'une des revendications 23 à 28,
**caractérisé en ce que**
dans la zone de la surface de contrôle (19) est agencé un dispositif optique (29) par lequel le motif de lignes (27) est susceptible d'être généré à partir des rayons de balayage (15).

30. Dispositif selon l'une des revendications 16 à 29,
**caractérisé en ce que**
le détecteur (13) est réalisé de telle sorte que pour des distances dans une zone proche comprenant la surface de contrôle (19), il ne s'effectue pas de réflexion directe des rayons de balayage (15) sur un dispositif récepteur (43) du détecteur (13).

31. Dispositif selon la revendication 29 ou 30,
**caractérisé en ce que**
au moyen du dispositif optique (29), il est possible de générer un décalage entre les rayons de balayage émis (15) et les rayons de réception (31) émis par le motif de lignes (27).

32. Dispositif selon la revendication 31,
**caractérisé en ce que**
le dispositif optique (29) forme au moins un élément (45) conducteur de rayonnement qui forme du côté sortie au moins une ligne de contrôle (28) du motif de lignes (27) et qui comprend au moins un élément de dispersion (59) via lequel les rayons de balayage (15) émis par le détecteur (13) sont susceptibles d'être injectés dans l'élément (45) conducteur de rayonnement.

33. Dispositif selon la revendication 32,
**caractérisé en ce que**
l'élément (45) conducteur de rayonnement et l'élément de dispersion (47) sont réalisés sur un corps (29) d'un seul tenant réalisé en particulier en matière plastique.

34. Dispositif selon l'une des revendications 29 à 33,
**caractérisé en ce que**
le dispositif optique (29) est un corps perméable au rayonnement et en particulier d'un seul tenant qui est susceptible d'être amené à l'émission d'un rayonnement au moins sensiblement dans son ensemble au moyen des rayons de balayage (15) émis par le détecteur (13) ou au moyen de sources de rayonnement à l'extérieur du détecteur, et qui sert de source de rayonnement pour le motif de lignes (27), et dans la trajectoire des rayons, en avant ou en arrière du dispositif optique (29), il est prévu au moins un cache ou un masque (51) pourvu de zones perméables au rayonnement formant au moins une ligne de contrôle (28) du motif de lignes (27).

35. Dispositif selon l'une des revendications 29 à 34,
**caractérisé en ce que**
le dispositif optique (29) comprend au moins un prisme de déflexion (49) par lequel des rayons de balayage incidents (15) sont susceptibles d'être réfléchis en décalage parallèle, et au moins un cache ou un masque (51) prévu dans la trajectoire des rayons en avant ou en arrière du prisme de déflexion (49) est pourvu de zones perméables au rayonnement formant au moins une ligne de contrôle (28) du motif de lignes (27).

36. Dispositif selon l'une des revendications 23 à 35,
**caractérisé en ce que**
les lignes de contrôle du motif de lignes sont formées par des réflecteurs qui sont prévus de préférence sous forme de lames de matériau présentant une réflectivité élevée par comparaison à celle de l'environnement.

37. Véhicule (11) comportant au moins un détecteur optoélectronique (13) solidaire du véhicule, en particulier un scanneur à laser pour détecter l'environnement du véhicule et comportant un dispositif associé au détecteur (13) et destiné à déterminer l'orientation du détecteur, selon l'une des revendications 16 à 36.
